# EUROPEAN PATENT APPLICATION

(11) **EP 4 513 130 A1**
(43) Date of publication of application: **26.02.2025**
(21) Application number: 23275125.5
(22) Date of filing: 23.08.2023
(51) Int. Cl.: F41H 7/00, B64C 39/02, B64U 80/00

(54) **A SYSTEM COMPRISING AN AUTONMOUS VEHICLE AND AN AUTONOMOUS DELIVERY DRONE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system (100) comprising a first autonomous vehicle (300) configured to carry an ammunition subcomponent (400). The first autonomous vehicle (300) comprises an ammunition subcomponent receiving system (302). The system further comprises an autonomous heavy lift drone air-vehicle (2000) comprising an ammunition subcomponent loading system (2202) configured for loading the first autonomous vehicle (300) with the ammunition subcomponent (400) by delivering the ammunition subcomponent (400) to the ammunition subcomponent receiving system (302) of the first autonomous vehicle (300).

## Description

### FIELD

The present disclosure relates to a system for providing ammunition subcomponents to an autonomous vehicle.

### BACKGROUND

There is a need for autonomous vehicles which are operable as a gun system. It follows that a gun system requires to be supplied with ammunition.

Hence a system, or part thereof, which provides ammunition to an autonomous vehicle operable as a gun system is highly desirable.

### SUMMARY

According to the present disclosure there is provided an apparatus, systems and methods as set forth in the appended claims. Other features of the invention will be apparent from the dependent claims, and the description which follows.

Accordingly there may be provided a system (100) comprising: a first autonomous vehicle (300) configured to carry ammunition subcomponents (400, 402, 403, 404). The system (100) may comprise an ammunition subcomponent receiving system (302). The system (100) may further comprise an ammunition subcomponent loading apparatus (200). The ammunition subcomponent loading apparatus (200) may comprise an ammunition subcomponent loading system (202) configured for loading the first autonomous vehicle (300) with the ammunition subcomponents (400, 402, 403, 404) via the ammunition subcomponent receiving system (302). The ammunition subcomponent loading apparatus (200) may further comprise a housing (204) in which the ammunition subcomponent loading system (202) is located. The housing (204) may define a vehicle loading bay (206) for receiving the first autonomous vehicle (300).

The housing (204) may define an opening (208) having a width (Wh).

The first autonomous vehicle (300) may comprise a chassis (1200).

A first wheel arm (1402) may extend from a first side (1206) of the vehicle chassis (1200). A second wheel arm (1402) may extend from a second side (1208) of the vehicle chassis (1200). A first end of the first wheel arm (1402) may be coupled to the chassis (1200) by a chassis mount (1220). A second end of the first wheel arm (1402) may be coupled to a first wheel (1404-1). A first end (1450) of the second wheel arm (1402) may be coupled to the chassis (1200) by a chassis mount (1220). A second end of the second wheel arm (1402) may be coupled to a second wheel (1404-2).

Each wheel (1400-1, 1400-2) may have an inwardly facing surface (1470) and an outwardly facing surface (1472). The overall width (Wv) of the vehicle may be defined by the distance between the respective outwardly facing surfaces (1472). The chassis mounts (1220) and wheel arm to wheel couplings may be configured such that in a first configuration the overall width (Wv1) of the first autonomous vehicle (300) has a first value which is greater than the width (Wh) of the housing opening (208), and in a second configuration the overall width (Wv1) of the first autonomous vehicle (300) has a second value, which is less than the first value and less than the width (Wh) of the housing opening (208).

The housing (204) may be an iso-container. The housing (204) may be a rectangular prism.

The ammunition subcomponent loading apparatus (200) may be configured as a transport vehicle and/or vessel for the first autonomous vehicle (300).

The ammunition subcomponent loading apparatus (200) may comprise an electrical charge apparatus for recharging a battery provided on the first autonomous vehicle (300).

The ammunition subcomponents (400, 402, 403) may comprise a charge unit (402) and/or a stub case charge unit (403).

The ammunition subcomponent loading system (202) may comprise a charge unit loading system (500) and/or a stub case charge unit loading system (530).

The ammunition subcomponent receiving system (302) of the first autonomous vehicle (300) may comprise a charge unit receiving system (600) and/or a stub case charge unit receiving system (630).

The charge unit loading system (500) may be configured to couple to and deliver the charge unit (402) to the charge unit receiving system (600) of the first autonomous vehicle (300).

The stub case charge unit loading system (530) may be configured to couple to and deliver the stub case charge unit (403) to the stub case charge unit receiving system (630) of the first autonomous vehicle (300).

The ammunition subcomponent receiving system (302) of the first autonomous vehicle (300) may further comprise a charge unit storage system (650) operable to receive the charge unit (402) from the charge unit receiving system (600) of the first autonomous vehicle (300) so the charge unit (402) can be carried by the first autonomous vehicle (300).

The ammunition subcomponent receiving system (302) of the first autonomous vehicle (300) may further comprise a stub case charge unit storage system (652) operable to receive the stub case charge unit (403) from the stub case charge unit receiving system (630) of the first autonomous vehicle (300) so the stub case charge unit (403) can be carried by the first autonomous vehicle (300).

The ammunition subcomponents (400, 404) may comprise a projectile unit (404). The ammunition subcomponent loading system (202) may comprise a projectile unit loading system (550, 1550).

The ammunition subcomponent receiving system (302) of the first autonomous vehicle (300) may comprise a projectile unit receiving system (700).

The projectile unit loading system (550, 1550) may be configured to couple to and deliver a projectile unit (404) to the first autonomous vehicle (300) projectile unit receiving system (700).

The first autonomous vehicle (300) may further comprise a projectile unit storage system (750) operable to receive a projectile unit (404) from the first autonomous vehicle (300) projectile unit receiving system (700).

The charge unit loading system (500) may comprise a charge unit storage section (502) which comprises a charge unit guide track (504) that defines a charge unit guide path (506) and is configured to retain a charge unit (402).

The charge unit loading system (500) may comprise a charge unit conveyor system (508) for moving the charge unit (402) along the charge unit guide track (504) to a charge unit delivery section (510). The charge unit delivery section (510) may be configured to receive the charge unit (402) from the charge unit conveyor system (508) for delivery to the charge unit receiving system (600) of the first autonomous vehicle (300).

The charge unit loading system (500) may further comprise a stub case charge unit storage section (532) which comprises a stub case charge unit guide track (534) that defines a stub case charge unit guide path (536) and is configured to retain a stub case charge unit (403).

The charge unit loading system (500) may further comprise a stub case charge unit conveyor system (538) for moving the stub case charge unit (432) along the stub case charge unit guide track (534) to a stub case charge unit delivery section (540).

The stub case charge unit delivery section (540) may be configured to receive the stub case charge unit (403) from the stub case charge unit conveyor system (538) for delivery to the stub case charge unit receiving system (630) of the first autonomous vehicle (300).

The charge unit storage section (502) may further comprise a plurality of charge unit storage compartments (516), each of the plurality of storage compartments (516) configured to retain one or more charge units (402).

A section of the charge unit conveyor system (508) may be provided in each storage compartment (516) and said section configured for moving the charge unit (402) in each storage compartment (516) to enter the charge unit guide track (504).

The stub case charge unit storage section (532) may further comprise a plurality of stub case charge unit storage compartments (546), each of the plurality of stub case charge storage compartments (546) configured to retain one or more stub case charge units (403).

A section of the stub case charge unit conveyor system (538) may be provided in each stub case charge storage compartment (546) and said section configured for moving the stub case charge unit (403) in each stub case charge storage compartment (546) to enter the stub case charge unit guide track (534).

The charge unit delivery section (510) may comprise a plurality of charge unit outlet ports (512) each fed from the charge unit conveyor system (508).

The vehicle charge unit receiving system (600) may comprise a plurality of charge unit inlet ports (514) arranged in the same configuration as the charge outlet ports (512) and operable to be in alignment with the charge outlet ports (512) for receiving the charge unit (402) from the charge unit loading system (500).

The stub case charge unit delivery section (540) may comprise a plurality of stub case charge unit outlet ports (542) each fed from the stub case charge unit conveyor system (538).

The vehicle stub case charge unit receiving system (630) may comprise a plurality of stub case charge unit inlet ports (544) arranged in the same configuration as the stub case charge unit outlet ports (542) and operable to be in alignment with the stub case charge outlet ports (542) for receiving the stub case charge unit (403) from the stub case charge unit loading system (530).

The projectile unit loading system (550) may comprise a storage cavity (552) configured to support the projectile unit (404) in a first orientation.

The projectile unit loading system (550) may comprise a delivery unit (554) configured to receive the projectile unit (404) in a first orientation and rotate it to be in a second orientation for delivery to the first autonomous vehicle (300) projectile unit receiving system (700).

The projectile unit loading system (550) may comprise a conveyor (556) for moving the projectile unit (404) from the storage cavity (552) to the delivery unit (554).

The projectile unit loading system (550) may comprise a projectile guide structure configured to support the projectile unit in the first orientation as it is moved from the storage cavity (552) to the delivery unit (554).

The delivery unit (554) may comprise a support arm (556) configured to receive and retain the projectile unit (404) in the first orientation, pivot from the first orientation to the second orientation; and when in the second orientation, release the projectile unit (404) so the projectile unit (404) is delivered to the projectile unit receiving system (700) of the vehicle.

The projectile unit loading system (1550) may comprise a storage cavity (1552) which defines a longitudinal axis (1553) along the length of the storage cavity (1553). The storage cavity (1552) may comprise a mount (1560) configured to support and retain the projectile unit (404) parallel to the longitudinal axis (1553) at a mount position within the storage cavity (1552).

The projectile unit loading system (1550) may comprise a delivery unit (1554) configured to retain the projectile unit (404) parallel to the longitudinal axis (1553), and retrieve the projectile unit (404) from the mount (1560); convey the projectile unit (404) from the mount position to a delivery position in the storage cavity (552) for delivery to the first autonomous vehicle (300) projectile unit receiving system (700).

The delivery unit (1554) may comprise: a support arm (1556) configured to receive and retain the projectile unit (404) parallel to the longitudinal axis (1553); a guide track (1562) which extends along at least part of the length of the storage cavity (1552) parallel to the longitudinal axis (1553) and which extends to the delivery position; and an actuator (1564) operable to move the support arm (1556) from the mount position to the delivery position.

The support arm (1556) may be mounted to the guide track (1562) via a support unit (1558). The support arm (1556) may be mounted to the support unit (1558) such that it is operable to retain the projectile unit (404) parallel to the longitudinal axis (1553), and withdraw the projectile unit (404) from the mount (1560); and pivot about a rotational axis (1566) parallel to the direction of the guide track (1562) to align the projectile unit (404) with the vehicle delivery position.

There may also be provided a method of operating a system, the system comprising: a first autonomous vehicle (300) configured to carry an ammunition subcomponent (400) and comprising an ammunition subcomponent receiving system (302); an ammunition subcomponent loading apparatus (200) comprising: an ammunition subcomponent loading system (202) configured for loading the first autonomous vehicle (300) with the ammunition subcomponent (400); a housing (204) in which the ammunition subcomponent loading system (202) is located and which defines a vehicle loading bay (206); the first autonomous vehicle (300) comprising a chassis (1200), wheel arm actuators (1430), wheel mounting member actuators (1440) and wheel drive system; wherein the chassis (1200) extends along an x-axis, a first end (1202) of the chassis (1200) and a second end (1204) of the chassis (1200) are spaced apart from one another along the x-axis; the chassis (1200) extending along a y-axis, a first side (1206) of the chassis (1200) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; the first autonomous vehicle (300) further comprising a gun barrel (3000) having a barrel axis (3002), the barrel (3000) being mounted to the chassis (1200) by a pivot mount (3004), the barrel (3000) being pivotable relative to the x-axis about a pivot axis (3100) aligned with the y-axis and mounted such that it is constrained to move in a plane defined by the x-axis and z-axis; the wheel arm actuators (1430), wheel mounting member actuators (1440), wheel drive system forming part of a chassis suspension system (1400) coupled to the chassis (1200); wherein the method comprises the steps of: controlling the wheel drive system to transport the first autonomous vehicle (300) to rendezvous with the ammunition subcomponent loading apparatus (200); controlling the wheel arm actuators (1430), wheel mounting member actuators (1440) and/or drive system to position the first autonomous vehicle (300) relative to the ammunition subcomponent loading apparatus (200) such that the ammunition subcomponent receiving system (302) of the first autonomous vehicle (300) is aligned to receive the ammunition subcomponent (400) from the ammunition subcomponent loading system (202).

There may be provided a system (100) comprising: a first autonomous vehicle (300) configured to carry ammunition subcomponents (400, 402, 403, 404) and comprising an ammunition subcomponent receiving system (302); the system (100) further comprising a second autonomous vehicle (800) comprising an ammunition subcomponent loading system (202) configured for loading the first autonomous vehicle (300) with the ammunition subcomponents (400, 402, 403, 404) by delivering the ammunition subcomponents (400, 402, 403, 404) to the ammunition subcomponent receiving system (302).

The first autonomous vehicle (300) and/or the second autonomous vehicle (800) may comprise: a chassis (1200) extending along an x-axis, a first end (1202) of the chassis (1200) and a second end (1204) of the chassis (1200) spaced apart from one another along the x-axis; the chassis (1202) extending along a y-axis, a first side (1206) of the chassis (1202) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; a chassis suspension system (1400) comprising a plurality of wheel arms (1402), each wheel arm (1402) extending away from a different chassis mount (1220) on the chassis (1200) to a respective wheel (1404), each wheel (1404) being rotatably mounted on its respective wheel arm (1402), each wheel (1404) configured for engagement with a support surface 1500, each wheel arm (1402) and wheel (1404) configured to support the chassis (1200) apart from the support surface 1500; each wheel arm (1402) being pivotable relative to the chassis (1200) such that the roll of the chassis (1200) about the x-axis, the pitch of the chassis (1200) about the y-axis, the yaw of the chassis (1200) about the z-axis and height of the chassis (1200) in the z-axis is controllable by pivoting at least one of the wheel arms (1402) relative to the chassis (1200); and each wheel (1404) being pivotable relative to its respective wheel arm (1402); whereby the chassis suspension system (1400) of the first autonomous vehicle (300) is operable to position the chassis (1200) of the first autonomous vehicle (300) relative to the second autonomous vehicle (800) such that the ammunition subcomponent receiving system (302) of the first autonomous vehicle (300) is aligned to receive the ammunition subcomponent (400) from the ammunition subcomponent loading system (202) of the second autonomous vehicle (800), the alignment achievable by pivoting one or more wheel arms (1402) relative to the chassis (1200) and/or by pivoting one or more wheels (1404) relative to its respective wheel arm (1402) and/or by rotating one or more wheels (1404) relative to its respective wheel arm (1402); and/or the chassis suspension system (1400) of the second autonomous vehicle (800) is operable to position the chassis (1200) of the second autonomous vehicle (800) such that the ammunition subcomponent receiving system (302) of the first autonomous vehicle (300) is aligned to receive the ammunition subcomponent (400) from the ammunition subcomponent loading system (202) of the second autonomous vehicle (800), the alignment achievable by pivoting one or more wheel arms (1402) relative to the chassis (1200) and/or by pivoting one or more wheels (1404) relative to its respective wheel arm (1402) and/or by rotating one or more wheels (1404) relative to its respective wheel arm (1402).

The first autonomous vehicle (300) may comprise a gun barrel (3000) having a barrel axis (3002), the barrel (3000) being mounted to the chassis (1200) by a pivot mount (3004), the barrel (3000) being pivotable relative to the x-axis about a pivot axis (3100) aligned with the y-axis and mounted such that it is constrained to move in a plane defined by the x-axis and z-axis.

The ammunition subcomponents (400, 402, 403) may comprise a charge unit (402) and/or a stub case charge unit (403).

The ammunition subcomponent loading system (202) of the second autonomous vehicle (800) may comprise a charge unit loading system (500) and/or a stub case charge unit loading system (530).

The ammunition subcomponent receiving system (302) of the first autonomous vehicle (300) may comprise a charge unit receiving system (600) and/or a stub case charge unit receiving system (630).

The charge unit loading system (500) may be configured to couple to and deliver the charge unit (402) to the charge unit receiving system (600) of the first autonomous vehicle (300).

The stub case charge unit loading system (530) may be configured to couple to and deliver the stub case charge unit (403) to the stub case charge unit receiving system (630) of the first autonomous vehicle (300).

The ammunition subcomponent receiving system (302) of the first autonomous vehicle (300) may further comprise a charge unit storage system (650) operable to receive the charge unit (402) from the charge unit receiving system (600) of the first autonomous vehicle (300) so the charge unit (402) can be carried by the first autonomous vehicle (300).

The ammunition subcomponent receiving system (302) of the first autonomous vehicle (300) may further comprise a stub case charge unit storage system (652) operable to receive the stub case charge unit (403) from the stub case charge unit receiving system (630) of the first autonomous vehicle (300) so the stub case charge unit (403) can be carried by the first autonomous vehicle (300).

The ammunition subcomponent (400) may be provided as a projectile unit (404).

The ammunition subcomponent loading system (202) of the second autonomous vehicle (800) may comprise a projectile unit loading system (550, 1550).

The ammunition subcomponent receiving system (302) of the first autonomous vehicle (300) may comprise a projectile unit receiving system (700).

The projectile unit loading system (550, 1550) may be configured to couple to and deliver a projectile unit (404) to the first autonomous vehicle (300) projectile unit receiving system (700).

The first autonomous vehicle (300) may further comprise a projectile unit storage system (750) operable to receive a projectile unit (404) from the first autonomous vehicle (300) projectile unit receiving system (700).

The charge unit loading system (500) may comprise a charge unit storage section (502) which comprises a charge unit guide track (504) that defines a charge unit guide path (506) and is configured to retain a charge unit (402).

The charge unit loading system (500) may comprise a charge unit conveyor system (508) for moving the charge unit (402) along the charge unit guide track (504) to a charge unit delivery section (510).

The charge unit delivery section (510) may be configured to receive the charge unit (402) from the charge unit conveyor system (508) for delivery to the charge unit receiving system (600) of the first autonomous vehicle (300).

The charge unit loading system (500) may further comprise a stub case charge unit storage section (532) which comprises a stub case charge unit guide track (534) that defines a stub case charge unit guide path (536) and is configured to retain a stub case charge unit (403).

The charge unit loading system (500) may further comprise a stub case charge unit conveyor system (538) for moving the stub case charge unit (432) along the stub case charge unit guide track (534) to a stub case charge unit delivery section (540).

The stub case charge unit delivery section (540) may be configured to receive the stub case charge unit (403) from the stub case charge unit conveyor system (538) for delivery to the stub case charge unit receiving system (630) of the first autonomous vehicle (300).

The charge unit storage section (502) may further comprise a plurality of charge unit storage compartments (516), each of the plurality of storage compartments (516) configured to retain one or more charge units (402).

A section of the charge unit conveyor system (508) may be being provided in each storage compartment (516) and said section configured for moving the charge unit (402) in each storage compartment (516) to enter the charge unit guide track (504).

The stub case charge unit storage section (532) may further comprise a plurality of stub case charge unit storage compartments (546), each of the plurality of stub case charge storage compartments (546) configured to retain one or more stub case charge units (403).

A section of the stub case charge unit conveyor system (538) may be provided in each stub case charge storage compartment (546) and said section configured for moving the stub case charge unit (403) in each stub case charge storage compartment (546) to enter the stub case charge unit guide track (534).

The charge unit delivery section (510) may comprise a plurality of charge unit outlet ports (512) each fed from the charge unit conveyor system (508).

The vehicle charge unit receiving system (600) may comprise a plurality of charge unit inlet ports (514) arranged in the same configuration as the charge outlet ports (512) and operable to be in alignment with the charge outlet ports (512) for receiving the charge unit (402) from the charge unit loading system (500).

The stub case charge unit delivery section (540) may comprise a plurality of stub case charge unit outlet ports (542) each fed from the stub case charge unit conveyor system (538).

The vehicle stub case charge unit receiving system (630) may comprise a plurality of stub case charge unit inlet ports (544) arranged in the same configuration as the stub case charge unit outlet ports (542) and operable to be in alignment with the stub case charge outlet ports (542) for receiving the stub case charge unit (403) from the stub case charge unit loading system (530).

The projectile unit loading system (550) may comprise a storage cavity (552) configured to support the projectile unit (404) in a first orientation.

The projectile unit loading system (550) may comprise a delivery unit (554) configured to receive the projectile unit (404) in a first orientation and rotate it to be in a second orientation for delivery to the first autonomous vehicle (300) projectile unit receiving system (700).

The projectile unit loading system (550) may comprise a conveyor (558) for moving the projectile unit (404) from the storage cavity (552) to the delivery unit (554).

The projectile unit loading system (550) may comprise a projectile guide structure configured to support the projectile unit in the first orientation as it is moved from the storage cavity (552) to the delivery unit (554).

The delivery unit (554) may comprise a support arm (556) configured to: receive and retain the projectile unit (404) in the first orientation, pivot from the first orientation to the second orientation; and when in the second orientation, release the projectile unit (404) so the projectile unit (404) is delivered to the projectile unit receiving system (700) of the vehicle.

The projectile unit loading system (1550) may comprise a storage cavity (1552) which defines a longitudinal axis (1553) along the length of the storage cavity (1553); the storage cavity (1552) comprising a mount (1560) configured to support and retain the projectile unit (404) parallel to the longitudinal axis (1553) at a mount position within the storage cavity (1552).

The projectile unit loading system (1550) may comprise a delivery unit (1554) configured to retain the projectile unit (404) parallel to the longitudinal axis (1553), retrieve the projectile unit (404) from the mount (1560); and convey the projectile unit (404) from the mount position to a delivery position in the storage cavity (552) for delivery to the first autonomous vehicle (300) projectile unit receiving system (700).

The delivery unit (1554) may comprise a support arm (1556) configured to receive and retain the projectile unit (404) parallel to the longitudinal axis (1553); a guide track (1562) which extends along at least part of the length of the storage cavity (1552) parallel to the longitudinal axis (1553) and which extends to the delivery position; an actuator (1564) operable to move the support arm (1556) from the mount position to the delivery position.

The support arm (1556) may be mounted to the guide track (1562) via a support unit (1558). The support arm (1556) may be mounted to the support unit (1558) such that it is operable to retain the projectile unit (404) parallel to the longitudinal axis (1553), withdraw the projectile unit (404) from the mount (1560); and pivot about a rotational axis (1566) parallel to the direction of the guide track (1562) to align the projectile unit (404) with the vehicle delivery position.

There may be provided a method of operating a system, the system comprising: a first autonomous vehicle (300) configured to carry an ammunition subcomponent (400) and comprising an ammunition subcomponent receiving system (302); a second autonomous vehicle (800) comprising an ammunition subcomponent loading system (202) configured for loading the first autonomous vehicle (300) with the ammunition subcomponent (400) by delivering the ammunition subcomponent (400) to the ammunition subcomponent receiving system (302); the first autonomous vehicle (300) and/or second autonomous vehicle (800) comprising a chassis (1200), wheel arm actuators (1430), wheel mounting member actuators (1440) and wheel drive system; wherein the chassis (1200) extends along an x-axis, a first end (1202) of the chassis (1200) and a second end (1204) of the chassis (1200) are spaced apart from one another along the x-axis; the chassis (1200) extending along a y-axis, a first side (1206) of the chassis (1200) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; the first autonomous vehicle (300) further comprising a gun barrel (3000) having a barrel axis (3002), the barrel (3000) being mounted to the chassis (1200) by a pivot mount (3004), the barrel (3000) being pivotable relative to the x-axis about a pivot axis (3100) aligned with the y-axis and mounted such that it is constrained to move in a plane defined by the x-axis and z-axis; the wheel arm actuators (1430), wheel mounting member actuators (1440), wheel drive system forming part of a chassis suspension system (1400) coupled to the chassis (1200); wherein the method comprises the steps of: controlling the wheel drive system to transport the first autonomous vehicle (300) and/or second autonomous vehicle (800) to rendezvous with the other of the first autonomous vehicle (300) and/or second autonomous vehicle (800); controlling the wheel arm actuators (1430), wheel mounting member actuators (1440) and/or drive system to position the first autonomous vehicle (300) and second autonomous vehicle (800) relative to one another such that the ammunition subcomponent receiving system (302) of the first autonomous vehicle (300) is aligned to receive the ammunition subcomponent (400) from the ammunition subcomponent loading system (202) of the second autonomous vehicle (800).

There may be provided a system (100) comprising an autonomous delivery vehicle (900) comprising an ammunition subcomponent loading system (202) configured for delivering an ammunition subcomponent pack (450) to a target object (380) the ammunition subcomponent pack (450) operable for storage of an ammunition subcomponent (400).

The autonomous delivery vehicle (900) may comprise an ammunition subcomponent pack engagement support region (904) for locating the ammunition subcomponent pack (450) on the autonomous delivery vehicle (900).

The autonomous delivery vehicle (900) may comprise a lifting arm (902) comprising a grip (906).

The lifting arm (902) may be configured to couple to the ammunition pack (450) on the autonomous delivery vehicle (900) using the grip (906), lift the ammunition pack (450) from the ammunition subcomponent pack engagement support region (904) and deposit it on the target object (380).

The lifting arm (902) may be configured to couple to an ammunition pack (450) on the target object (380) using the grip (906), lift it from the target object (380) and deposit the ammunition pack (450) on the ammunition subcomponent pack engagement support region (904) on the autonomous delivery vehicle (900).

The autonomous delivery vehicle (900) may comprise a chassis (1200) extending along an x-axis, a first end (1202) of the chassis (1200) and a second end (1204) of the chassis (1200) spaced apart from one another along the x-axis; the chassis (1202) extending along a y-axis, a first side (1206) of the chassis (1202) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; a chassis suspension system (1400) comprising a plurality of wheel arms (1402), each wheel arm (1402) extending away from a different chassis mount (1220) on the chassis (1200) to a respective wheel (1404), each wheel (1404) being rotatably mounted on its respective wheel arm (1402), each wheel (1404) configured for engagement with a support surface 1500, each wheel arm (1402) and wheel (1404) configured to support the chassis (1200) apart from the support surface 1500; each wheel arm (1402) being pivotable relative to the chassis (1200) such that the roll of the chassis (1200) about the x-axis, the pitch of the chassis (1200) about the y-axis, the yaw of the chassis (1200) about the z-axis and height of the chassis (1200) in the z-axis is controllable by pivoting at least one of the wheel arms (1402) relative to the chassis (1200); and each wheel (1404) being pivotable relative to its respective wheel arm (1402); whereby the chassis suspension system (1400) of the autonomous delivery vehicle (900) is operable to position the chassis (1200) of the autonomous delivery vehicle (900) relative to a target object (380) so that the grip (906) is operable to reach between the autonomous delivery vehicle (900) and the target object (380), the alignment achievable by pivoting one or more wheel arms (1402) relative to the chassis (1200) and/or by pivoting one or more wheels (1404) relative to its respective wheel arm (1402) and/or by rotating one or more wheels (1404) relative to its respective wheel arm (1402).

The lifting arm (902) may be configured to couple to the target object (380); and the autonomous delivery vehicle (900) is operable to apply a force to move the target object (380).

The target object may be a first autonomous vehicle (300) configured to carry an ammunition subcomponent (400) and comprising an ammunition subcomponent receiving system (302). The lifting arm (902) may be configured to deposit the ammunition pack (450) on the ammunition subcomponent receiving system (302).

The first autonomous vehicle (300) may comprise a chassis (1200) extending along an x-axis, a first end (1202) of the chassis (1200) and a second end (1204) of the chassis (1200) spaced apart from one another along the x-axis; the chassis (1202) extending along a y-axis, a first side (1206) of the chassis (1202) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; a chassis suspension system (1400) comprising a plurality of wheel arms (1402), each wheel arm (1402) extending away from a different chassis mount (1220) on the chassis (1200) to a respective wheel (1404), each wheel (1404) being rotatably mounted on its respective wheel arm (1402), each wheel (1404) configured for engagement with a support surface 1500, each wheel arm (1402) and wheel (1404) configured to support the chassis (1200) apart from the support surface 1500; each wheel arm (1402) being pivotable relative to the chassis (1200) such that the roll of the chassis (1200) about the x-axis, the pitch of the chassis (1200) about the y-axis, the yaw of the chassis (1200) about the z-axis and height of the chassis (1200) in the z-axis is controllable by pivoting at least one of the wheel arms (1402) relative to the chassis (1200); and each wheel (1404) being pivotable relative to its respective wheel arm (1402); whereby the chassis suspension system (1400) of the first autonomous vehicle (300) is operable to position the chassis (1200) of the first autonomous vehicle (300) relative to the autonomous delivery vehicle (900) such that the ammunition subcomponent receiving system (302) of the first autonomous vehicle (300) is aligned to receive the ammunition pack (450) from the lifting arm (902) of the autonomous delivery vehicle (900), the alignment achievable by pivoting one or more wheel arms (1402) relative to the chassis (1200) and/or by pivoting one or more wheels (1404) relative to its respective wheel arm (1402) and/or by rotating one or more wheels (1404) relative to its respective wheel arm (1402).

The first autonomous vehicle (300) may comprise a gun barrel (3000) having a barrel axis (3002), the barrel (3000) being mounted to the chassis (1200) by a pivot mount (3004), the barrel (3000) being pivotable relative to the x-axis about a pivot axis (3100) aligned with the y-axis and mounted such that it is constrained to move in a plane defined by the x-axis and z-axis.

There may be provided a method of operating a system, the system comprising an autonomous delivery vehicle (900) comprising an ammunition subcomponent loading system (202) configured for delivering an ammunition subcomponent pack (450) to a target object (380), the ammunition subcomponent pack (450) operable for storage of an ammunition subcomponent (400); the autonomous delivery vehicle (900) comprising an ammunition subcomponent pack engagement support region (904) for locating the ammunition subcomponent pack (450) on the autonomous delivery vehicle (900); the autonomous delivery vehicle (900) comprising a lifting arm (902) comprising a grip (906), the autonomous delivery vehicle (900) comprising a chassis (1200), wheel arm actuators (1430), wheel mounting member actuators (1440) and wheel drive system; wherein the chassis (1200) extends along an x-axis, a first end (1202) of the chassis (1200) and a second end (1204) of the chassis (1200) are spaced apart from one another along the x-axis; the chassis (1200) extending along a y-axis, a first side (1206) of the chassis (1200) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; the wheel arm actuators (1430), wheel mounting member actuators (1440), wheel drive system forming part of a chassis suspension system (1400) coupled to the chassis (1200); wherein the method comprises the steps of: controlling the wheel drive system to transport the autonomous delivery vehicle (900) to rendezvous with the target object 380; controlling the wheel arm actuators (1430), wheel mounting member actuators (1440) and/or drive system to position the autonomous delivery vehicle (900) relative to the target object (380) such that that the grip (906) is operable to reach between autonomous delivery vehicle (900) and the target object (380).

The method may further comprise the step of: coupling to the ammunition pack (450) on the autonomous delivery vehicle (900) using the grip (906), lifting the ammunition pack (450) from the ammunition subcomponent pack engagement support region (904) and deposit the ammunition pack (450) on the target object (380).

The method may further comprise the step of: coupling to an ammunition pack (450) on the target object (380) using the grip (906), lift the ammunition pack (450) from the target object (380) and deposit the ammunition pack (450) on the ammunition subcomponent pack engagement support region (904) on the autonomous delivery vehicle (900).

The method may further comprise the steps of: coupling the lifting arm (902) to the target object (380) the autonomous delivery vehicle (900) applying a force to move the target object (380).

There may be provided a system (100) comprising a first autonomous vehicle (300) configured to carry an ammunition subcomponent (400) and comprising an ammunition subcomponent receiving system (302); the system (100) further comprising an autonomous heavy lift drone air-vehicle (2000) comprising an ammunition subcomponent loading system (2202) configured for loading the first autonomous vehicle (300) with the ammunition subcomponent (400) by delivering the ammunition subcomponent (400) to the ammunition subcomponent receiving system (302) of the first autonomous vehicle (300).

The ammunition subcomponent loading system (2202) of the autonomous heavy lift drone air-vehicle (2000) may comprise a storage cavity (2552) configured to support and retain the ammunition subcomponent (400) at a mount position within the storage cavity (2552).

The ammunition subcomponent loading system (2202) of the autonomous heavy lift drone air-vehicle (2000) a delivery unit (2554) may be configured to retrieve the ammunition subcomponent (400) from the mount position within the storage cavity (2552).

The ammunition subcomponent loading system (2202) of the autonomous heavy lift drone air-vehicle (2000) a delivery unit (2554) may be configured to convey the ammunition subcomponent (400) from the mount position to a delivery position in the storage cavity (2552) for delivery to the ammunition subcomponent receiving system (302) of the first autonomous vehicle (300).

The delivery unit (2554) may comprise a conveyor system (2562) for moving the ammunition subcomponent (400) along the storage cavity (2552) for delivery to the ammunition subcomponent receiving system (302) of the first autonomous vehicle (300).

The ammunition subcomponent loading system (2202) of the autonomous heavy lift drone air-vehicle (2000) comprises a housing (2204) which defines a plurality of storage cavities (2552), each configured to support and retain an ammunition subcomponent (400) at a mount position within the respective storage cavity (2552).

The housing (2204) may be centred on and rotatable about a rotational axis (2206) such that the delivery position of each storage cavity (2552) is movable around the rotational axis (2206) to be aligned, in turn, with the ammunition subcomponent receiving system (302) of the first autonomous vehicle (300).

The housing (2204) may be coupled to an indexing system operable to control the rotation of the housing (2204) about the rotational axis (2206).

The first autonomous vehicle (300) may comprise a chassis (1200) extending along an x-axis, a first end (1202) of the chassis (1200) and a second end (1204) of the chassis (1200) spaced apart from one another along the x-axis; the chassis (1202) extending along a y-axis, a first side (1206) of the chassis (1202) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; a chassis suspension system (1400) comprising a plurality of wheel arms (1402), each wheel arm (1402) extending away from a different chassis mount (1220) on the chassis (1200) to a respective wheel (1404), each wheel (1404) being rotatably mounted on its respective wheel arm (1402), each wheel (1404) configured for engagement with a support surface 1500, each wheel arm (1402) and wheel (1404) configured to support the chassis (1200) apart from the support surface 1500; each wheel arm (1402) being pivotable relative to the chassis (1200) such that the roll of the chassis (1200) about the x-axis, the pitch of the chassis (1200) about the y-axis, the yaw of the chassis (1200) about the z-axis and height of the chassis (1200) in the z-axis is controllable by pivoting at least one of the wheel arms (1402) relative to the chassis (1200); and each wheel (1404) being pivotable relative to its respective wheel arm (1402); whereby the chassis suspension system (1400) of the first autonomous vehicle (300) is operable to position the chassis (1200) of the first autonomous vehicle (300) relative to the heavy lift drone air-vehicle (2000) such that the ammunition subcomponent receiving system (302) of the first autonomous vehicle (300) is aligned to receive the ammunition subcomponent (400) from the ammunition subcomponent loading system (2202) of the autonomous heavy lift drone air-vehicle (2000); the alignment achievable by pivoting one or more wheel arms (1402) relative to the chassis (1200) and/or by pivoting one or more wheels (1404) relative to its respective wheel arm (1402) and/or by rotating one or more wheels (1404) relative to its respective wheel arm (1402).

The first autonomous vehicle (300) may comprise a gun barrel (3000) having a barrel axis (3002), the barrel (3000) being mounted to the chassis (1200) by a pivot mount (3004), the barrel (3000) being pivotable relative to the x-axis about a pivot axis (3100) aligned with the y-axis and mounted such that it is constrained to move in a plane defined by the x-axis and z-axis.

The ammunition subcomponent (400) may be provided as a projectile unit (404).

There may be provided a method of operating a system, the system comprising: a first autonomous vehicle (300) configured to carry an ammunition subcomponent (400) and comprising an ammunition subcomponent receiving system (302); an autonomous heavy lift drone air-vehicle (2000) comprising an ammunition subcomponent loading system (2202) configured for loading the first autonomous vehicle (300) with the ammunition subcomponent (400) by delivering the ammunition subcomponent (400) to the ammunition subcomponent receiving system (302); the first autonomous vehicle (300) comprising a chassis (1200), wheel arm actuators (1430), wheel mounting member actuators (1440) and wheel drive system; wherein the chassis (1200) extends along an x-axis, a first end (1202) of the chassis (1200) and a second end (1204) of the chassis (1200) are spaced apart from one another along the x-axis; the chassis (1200) extending along a y-axis, a first side (1206) of the chassis (1200) and a second side (1208) of the chassis (1200) spaced apart from one another along the y-axis; the x-axis being at right angles to the y-axis; the x-axis defining a chassis roll axis (1210), the y-axis defining a chassis pitch axis (1212) and a z-axis defining a chassis yaw axis (1214); the z-axis being perpendicular to the x-axis and y-axis; the wheel arm actuators (1430), wheel mounting member actuators (1440), wheel drive system forming part of a chassis suspension system (1400) coupled to the chassis (1200); wherein the method comprises the steps of: controlling the autonomous heavy lift drone air-vehicle (2000) to fly to rendezvous with the first autonomous vehicle (300); and/or controlling the wheel drive system to transport the first autonomous vehicle (300) to rendezvous with the autonomous heavy lift drone air-vehicle (2000); controlling the wheel arm actuators (1430), wheel mounting member actuators (1440) and/or drive system to position the first autonomous vehicle (300) relative to the ammunition subcomponent loading system (2202) of the autonomous heavy lift drone air-vehicle (2000) such that the ammunition subcomponent receiving system (302) of the first autonomous vehicle (300) is aligned to receive the ammunition subcomponent (400) from the ammunition subcomponent loading system (2202).

Hence there is provided a system, or part thereof, which is configured to provide ammunition to an autonomous vehicle operable as a gun system.

### BRIEF DESCRIPTION OF THE FIGURES

Embodiments of the invention will now be described by way of example only with reference to the figures, in which:
Figures 1, 2 show a first example of a system including apparatus for providing ammunition subcomponents to an autonomous vehicle, according to the present disclosure;
Figures 3 to 6 show another example of a system including apparatus for providing ammunition subcomponents to an autonomous vehicle, according to the present disclosure;
Figures 7 to 9 show a further example of a system including apparatus for providing ammunition subcomponents to an autonomous vehicle, according to the present disclosure;
Figures 10 to 13 show a first example of an ammunition subcomponent loading system and how it may operate to provide ammunition subcomponents to an autonomous vehicle, according to the present disclosure;
Figures 14 to 18 show a second example of an ammunition subcomponent loading system and how it may operate to provide ammunition subcomponents to an autonomous vehicle, according to the present disclosure;
Figures 19 to 22 show a third example of an ammunition subcomponent loading system and how it may operate to provide ammunition subcomponents to an autonomous vehicle, according to the present disclosure;
Figures 23 to 25 show a fourth example of an ammunition subcomponent loading system and how it may be operate to providing ammunition subcomponents to an autonomous vehicle, according to the present disclosure;
Figures 26 to 28 show another example of a system including apparatus for providing ammunition subcomponents to an autonomous vehicle, according to the present disclosure;
Figures 29, 30 illustrate the key features of a gun targeting system which forms part of an autonomous vehicle of the present disclosure, with the gun targeting system shown from a plan view;
Figures 31 to 33 illustrate an example of how the gun targeting system of the present disclosure may be operated, with the gun targeting system shown from a plan view; and
Figures 34 to 36 further illustrate how the gun targeting system of the present disclosure may be operated, with the gun targeting system shown from a side view.

### DETAILED DESCRIPTION

The present disclosure relates to systems for loading vehicles with ammunition. The present disclosure relates systems for loading autonomous vehicles with ammunition. The present disclosure relates to autonomous delivery vehicles for loading other autonomous vehicles with ammunition. The present disclosure relates to autonomous vehicles performing operations on other autonomous vehicles.

The present disclosure relates to gun targeting system. In particular the present disclosure relates to a gun targeting system provided as a vehicle for transporting, supporting and targeting a gun as well as a method of controlling a gun targeting system.

The autonomous vehicles may be self-propelled vehicles.

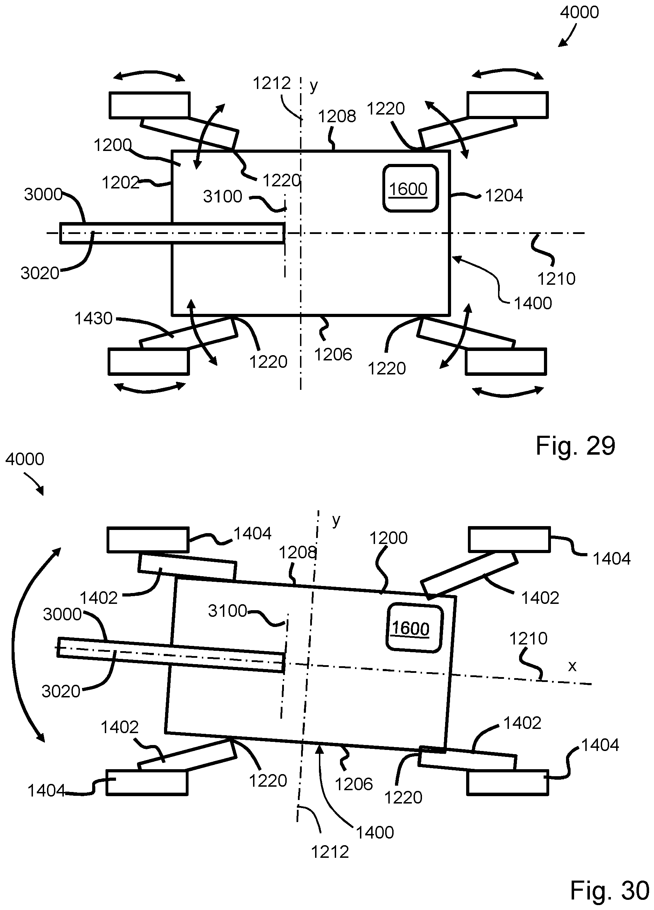

Any of the examples of autonomous vehicles of the present disclosure may comprise a chassis 1200 with a chassis suspension system 1400. Details of the chassis suspension system 1400 and how it may be operated are illustrated in figures 29 to 36.

In some examples of the autonomous vehicles of the present disclosure the autonomous vehicle may be provided with a weapon system comprising a gun 3000 (as shown in figures 29 to 36). In other examples, the autonomous vehicles of the present disclosure may not comprise a weapon system comprising a gun 3000.

In examples in which a weapon system is provided, the autonomous vehicle may be configured as a gun targeting system 4000 by virtue of the operability of the chassis suspension system 1400.

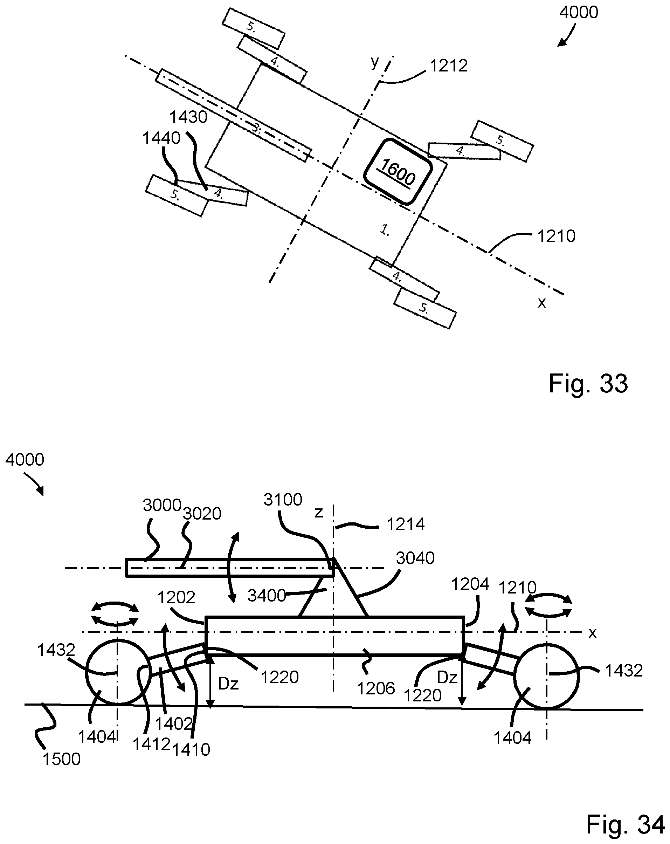

Figures 29 to 36 show an example of an autonomous vehicle according to the present disclosure comprising a gun, where the gun is attached to the vehicle by a mount. The autonomous vehicle and configuration of the gun mount provide a gun targeting system 4000. Figures 29 to 33 illustrates a plan view and Figures 34 to 36 show a side view.

In all examples in which an autonomous vehicle of the present disclosure is provided with the chassis suspension system 1400, the operability of the chassis suspension system 1400 allows for the autonomous vehicle to position and orientate itself ready to deliver and/or receive ammunition subcomponents.

As shown in figure 29, each autonomous vehicle chassis extends along an x-axis, a first end 1202 of the chassis 1200 and a second end 1204 of the chassis 1200 spaced apart from one another along the x-axis. The chassis 1200 also extends along a y-axis, a first side 1206 of the chassis 1200 and a second side 1208 of the chassis 1200 spaced apart from one another along the y-axis. The x-axis is at right angles to the y-axis.

The x-axis defines a chassis roll axis 1210. The y-axis defines a chassis pitch axis 1212. A z-axis defines a chassis yaw axis 1214, the z-axis being perpendicular to the x-axis and y-axis.

The chassis suspension system 1400 comprises a plurality of wheel arms 1402, each wheel arm 1402 extending away from a different chassis mount 1220 on the chassis 1200 to a respective wheel 1404, each wheel 1404 being rotatably mounted on its respective wheel arm 1402, each wheel 1404 configured for engagement with a support surface 1500.

Each wheel arm 1402 is pivotable relative to the chassis 1200 such that the roll of the chassis 1200 about the x-axis, the pitch of the chassis 1200 about the y-axis and the yaw of the chassis 1200 about the z-axis is controllable by pivoting at least one of the wheel arms 1402 relative to the chassis 1200. Additionally, each wheel 1404 is pivotable relative to its respective wheel arm 1402.

Hence each wheel arm 1402 may be pivotable relative to the chassis 1200 about an axis parallel to the z-axis and/or may be pivotable relative to the chassis 1200 about an axis parallel to the y-axis (for example shown in Figures 34, 35, 36). That is to say, each wheel arm 1402 may be pivotable relative to the chassis 1200 in a direction having a component parallel to the z-axis and/or parallel to the y-axis. Hence pivoting a wheel arm 1402 about the z-axis, will yaw the chassis 1200 about the z-axis, and pivoting wheel arm 1402 about the y-axis, will pitch the chassis about the y-axis.

Additionally, each wheel 1404 is pivotable relative to its respective wheel arm 1402 to thereby change the angle of one or more of the wheels 1404 relative to its respective wheel arm 1402 (for example shown in figures 34, 35, 36). Hence, for example, such pivoting of a wheel 1404 relative to its respective wheel arm 1402 alters the direction which the wheel 1404 is aligned such that when the wheel is rotated the chassis/vehicle is steered in a direction dictated by the orientation of the wheel 1404 relative to its respective wheel arm 1402.

As shown in figures 34 to 36, each wheel arm 1402 and wheel 1404 are configured to support the chassis 1200 apart from the support surface 1500. Each wheel arm 1402 and wheel 1404 may be configured to support the chassis 1200 apart from the support surface 1500 in the direction of the z-axis. Each wheel arm 1402 and wheel 1404 may be configured to support the chassis 1200 a **distance Dz** apart from the support surface 1500 in the z-axis, where the **distance Dz** can be varied by the suspension system 1400, and may vary for different locations on the chassis 1200.

Each wheel arm 1402 has a chassis mount end 1410 which in use is adjacent to the chassis 1200 and a wheel mount end 1412 to which may be attached one of the wheels 1404 for supporting the chassis 1200.

The chassis mount end 1410 of each wheel arm 1402 may be provided with a chassis mounting member 1414 (for example a bracket for attaching to the chassis 1200, the chassis mount end 1410 of each wheel arm 1402 and chassis mounting member 1414 being pivotable relative to one another around a chassis mount pivoting axis 1230. The chassis mounting member 1414 may be configured to support (e.g. couple) the chassis mount end 1410 of the wheel arm 1402 so that the wheel arm 1402 and chassis mounting member 1414 are operable to pivot at least 180 degrees relative to one another about the chassis mount pivoting axis 1230. That is to say, the wheel arm 1402 may be mounted to the chassis mount 1220 (for example via the chassis mounting member 1414) such that the wheel arm 1402 is operable to pivot at least 180 degrees relative to the chassis mount 1220. The wheel arm 1402 and chassis mounting member 1414 may be operable to pivot at least 180 degrees but no more than 200 degrees relative to one another. The wheel arm 1402 and chassis mounting member 1414 may be operable to pivot at least 180 degrees but no more than 190 degrees relative to one another. For example, the chassis mounting member 1414 and/or chassis mount 1220 may space the chassis end of the wheel arm 1402 apart from the chassis 1200 so that the wheel arm 1402 may be parallel to the chassis 1200 (e.g. extending parallel to the x-axis and/or extending in a direction having a component in a direction parallel to the x-axis), or allow the wheel arm 1402 to extend from its chassis mount end towards the chassis 1200 (e.g. angled 95 degrees relative to the y-axis and/or extending in a direction having a component in a direction angled 95 degrees to the y-axis). The wheel arm 1402 and chassis mount 1220 may be pivotable relative to one another around an axis parallel to the z axis and/or around a vertical axis. Each chassis mounting member 1414 may comprise a universal joint.

Each wheel arm 1402 may be provided with a wheel arm actuator 1430 to control the orientation of each wheel arm 1402 relative to the chassis 1200.

The wheel mount end 1412 of each wheel arm 1402 may be provided with a wheel mounting member 1416 (e.g. a bracket) for attaching to one of the wheels 1404, the wheel mount end 1412 of each wheel arm 1402 and wheel mounting member 1416 being pivotable relative to one another around a wheel mount pivoting axis 1432.

Each wheel mounting member 1416 is configured to couple with the wheel mount end 1412 of the wheel arm 1402 so that each wheel arm 1402 and wheel mounting member 1416 (and hence wheel 1404) are operable to pivot 180 degrees relative to one another about the wheel mount pivoting axis 1432. Each wheel arm 1402 and respective wheel mounting member 1416 (and hence wheel 1404) may be operable to pivot at least 180 degrees but no more than 200 degrees relative to one another about the wheel mount pivoting axis 1432. Each wheel arm 1402 and respective wheel mounting member 1416 (and hence wheel 1404) may be operable to pivot at least 180 degrees but no more than 190 degrees relative to one another about the wheel mount pivoting axis 1432. Each wheel mounting member 1416 may comprise a universal joint 420.

The chassis mount pivoting axis 1230 may be parallel to the wheel mount pivoting axis 1432. The chassis mount pivoting axis 1230 may be aligned with (e.g. parallel to) the z-axis.

Each wheel mounting member 1416 is provided with a wheel mounting member actuator 1440 to control the orientation of each wheel 402 relative to its respective wheel arm 1402.

At least one wheel 1404 is coupled to a drive system to rotate the, or each, wheel 1404 relative to its respective wheel arm 1402 to thereby move the gun targeting system 4000 from one location to another. For example the drive system may be an electric motor provided adjacent to the wheel 1404.

In examples where present, the autonomous vehicle may also comprise a gun barrel 3000 having a barrel axis 3020. As shown in figures 34 to 36, the barrel 3000 is mounted to the chassis 1200 by a pivot mount 3040, the barrel 3000 being pivotable relative to the x-axis about a pivot axis 3100 aligned with (e.g. parallel to) the y-axis. That is to say, the barrel 3000 is pivotable relative to the x-axis about a pivot axis 3100 aligned with (e.g. parallel to) the y-axis and mounted such that it is constrained to move in a plane defined by the x-axis and z-axis. Put another way, the barrel 3000 is pivotable relative to the x-axis about a pivot axis 3100 aligned with (e.g. parallel to) the y-axis, and the barrel 3000 is mounted to the chassis 1200, directly or indirectly, such that it is constrained to move in a plane defined by the x-axis and z-axis. That is to say, while the barrel 3000 may be pivotable relative to the x-axis about a pivot axis 3100 aligned with (e.g. parallel to) the y-axis, it is non-rotatable about the z-axis. Put another way, the barrel 3000 is limited to pivot relative to the x-axis about a pivot axis 3100 aligned with (e.g. parallel to) the y-axis, and mounted to the chassis 1200 (e.g. directly or indirectly) so that it cannot be swung around the z-axis.

Hence the vehicle may be provided as a gun targeting system 4000 by virtue of the way in which the gun barrel 3000 is mounted and the chassis suspension system 1400.

The suspension system is configured such that the autonomous vehicle to which it is provided is operable to position the barrel 3000 towards an orientation to target an object by pivoting one or more of the wheel arms 1402 relative to the chassis 1200 and/or by pivoting one or more wheels 1404 relative to its respective wheel arm 1402 and/or by rotating one or more wheels 1404 relative to its respective wheel arm 1402.

The autonomous vehicle may further comprise a control system 1600 operable to control the wheel arm actuators 1430 to roll the chassis 1200 about the x-axis, pitch the chassis 1200 about the y-axis and/or yaw the chassis 1200 about the z-axis to orientate (e.g. angle) the chassis 1200. Hence the control system 1600 is operable to control the suspension 400 position and orientate the autonomous vehicle as required to deliver/receive ammunition subcomponents. In examples comprising a barrel 3000, the control system 1600 is thus operable to control the suspension 400 position the barrel 3000 relative to a target.

Additionally or alternatively the control system 1600 may be operable to control the wheel mounting member actuators 1440 to pivot each wheel 1404 about the wheel mount pivoting axis 1432, and each wheel mounting member actuator 1440 is operable (e.g. controllable) independently of the other wheel mounting member actuators 1440.

The gun barrel 3000 may be coupled to a gun barrel actuator 1340 operable to pivot the gun barrel 3000 about the pivot axis 3100, the control system 1600 being operable to control the gun barrel actuator 1340 to pivot the gun barrel 3000 about the pivot axis 3100.

Each actuator (i.e. each of the wheel arm actuators 1430, wheel mounting member actuators 1440 and gun barrel actuator 1340) may be operable (e.g. controllable) independently of each other actuator.

The control system 1600 may be operable to control the wheel arm actuators 1430, wheel mounting member actuators 1440, and (in examples where present) the gun barrel actuator 1340 to position the barrel 3000 to target an object. For example, the control system 1600 may be operable to control the wheel arm actuators 1430, wheel mounting member actuators 1440, and (in examples where present) the gun barrel actuator 1340 to position the barrel 3000 to target an object in response to a command from a user to target an object and/or in response to receipt of data which identifies and/or locates a target, and/or in response to sensing and/or identifying a target. Additionally or alternatively, the control system 1600 may be operable to control the drive system to thereby drive the or each wheel 1404 to move the vehicle from one location to another (for example to get closer to a target, achieve a desired position relative to a target and/or to rendezvous with a system for reloading the vehicle with ammunition components).

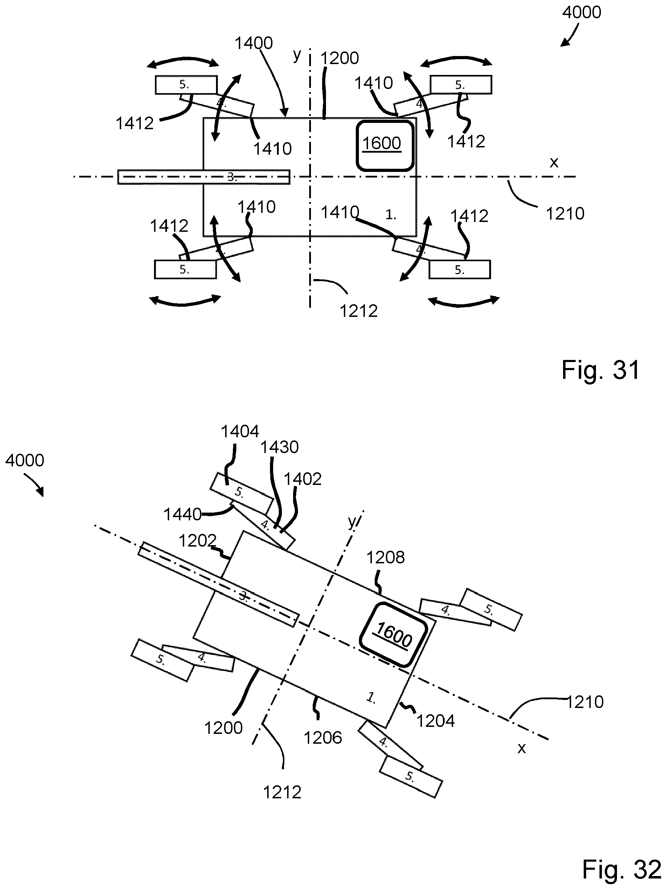

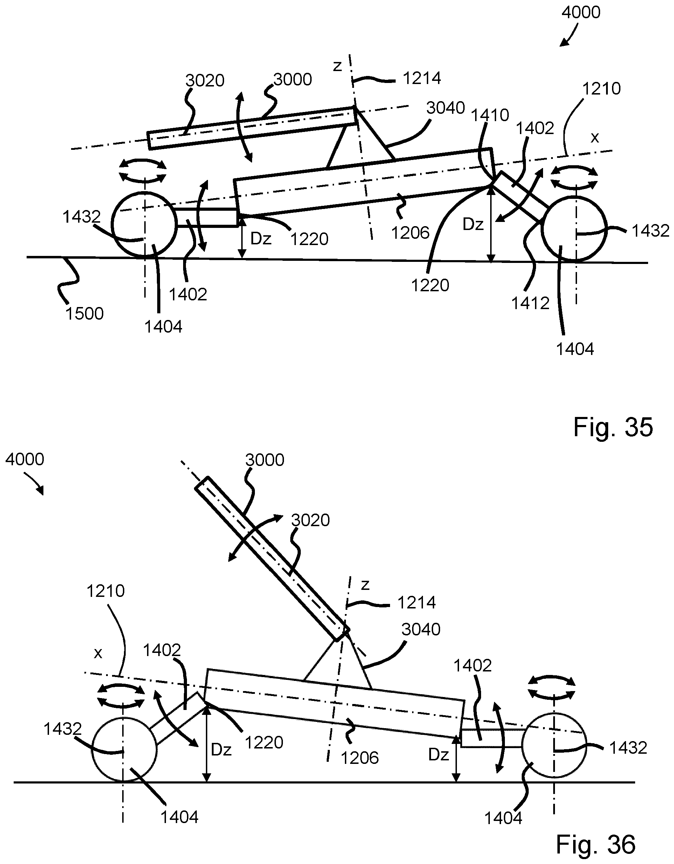

The vehicle may be operated according to a method comprising the steps of controlling the wheel drive system to transport the gun targeting system 4000 to a gun firing location, for example to arrive at a location as shown in figure 31 and figure 34. If the gun barrel 3000 is not positioned towards the target (e.g. its elevation and traverse are not as required to deliver a projectile from the barrel 3000 to the target), then the wheel mounting member actuators 1440 and/or drive system are controlled to position the barrel 3000 towards an orientation to target the object (for example in figure 32, where the chassis 1200 is rotated, by way of example, around the z-axis relative to the orientation shown in figure 30. Alternatively and/or additionally, the wheel arm actuators 1430, wheel mounting member actuators 1440, and/or the gun barrel actuator 1340 may be controlled to position the barrel 3000 towards an orientation to target an object, for example as shown in figure 33. Alternatively and/or additionally, the wheel arm actuators 1430, wheel mounting member actuators 1440, and/or the gun barrel actuator 1340 may be controlled to position the barrel 3000 towards an orientation to target an object as shown in figure 35 or figure 36, where the chassis 1200 is rotated, by way of example, around the y-axis relative to the orientation shown in figure 34, and the barrel 3000 may be rotated about the pivot axis 3100.

The method may further comprise the step of operating the gun to fire a projectile only when the gun barrel 3000 is in a plane defined by the x-axis and z-axis. In the example shown the gun barrel 3000 is always in a plane defined by the x-axis and z-axis (e.g. it is constrained to pivot about a pivot axis 3100 parallel to the y-axis) and mounted to the chassis 1200 (e.g. directly or indirectly) so that it cannot be swung around the z-axis. In other examples, the gun barrel may have stowed/travel orientation, and is aligned in a plane defined by the x-axis and z-axis prior to firing.

Coarse steering is achieved by repositioning the vehicle on the wheels 1404 for example to achieve a change in position between that shown in figure 32 and figure 33. This could be achieved by driving forwards and/or backwards. In other examples, not shown, this may utilize a mechanism which would allow the vehicle to rotate on the spot (e.g. about the z-axis). Such positioning achieves a reasonable level of accuracy but, on rough terrain in particular, may not reliably achieve the required alignment for targeting a the gun barrel 3000 or for aligning with a ammunition subcomponent delivery system.

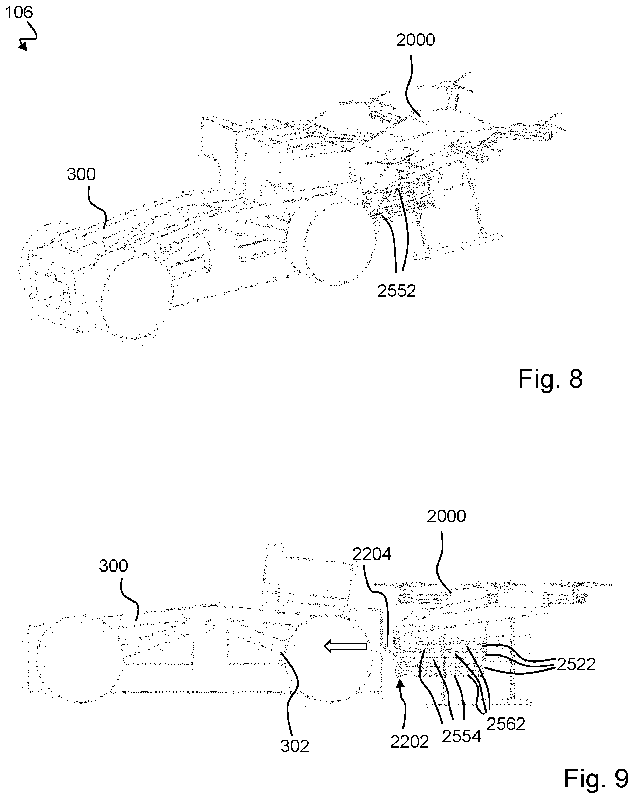

Fine traverse is achieved by manipulating the wheel arms and suspension once the vehicle is parked. Accordingly, the wheel arms are constructed so that the wheels can be moved towards/away from the vehicle chassis independently on all sides then the chassis can be rotated relative to the wheel position to achieve fine pointing of (for example <1mm). This is illustrated by the change in wheel arm position between figure 29 and figure 30, the change in wheel arm position between figure 32 and figure 33, and/or between the change in wheel arm position between figure 9 and figures 35 and/or 36.

In some examples rotation about the y-axis (e.g. pitch axis 1212) may achieve the majority of the angling of the barrel 3000, and the gun barrel actuator may be configured to pivot up to 10 degrees for "fine tuning" of the gun barrel position.

In some examples, when the barrel 3000 is at a "low angle" (for example between 0 degrees and about 30 degrees to the x-axis, all the wheel arms may be pivoted to lower the chassis 1200 close to the ground, minimising the overturning moment and increasing stability, thereby reducing the risk of tipping.

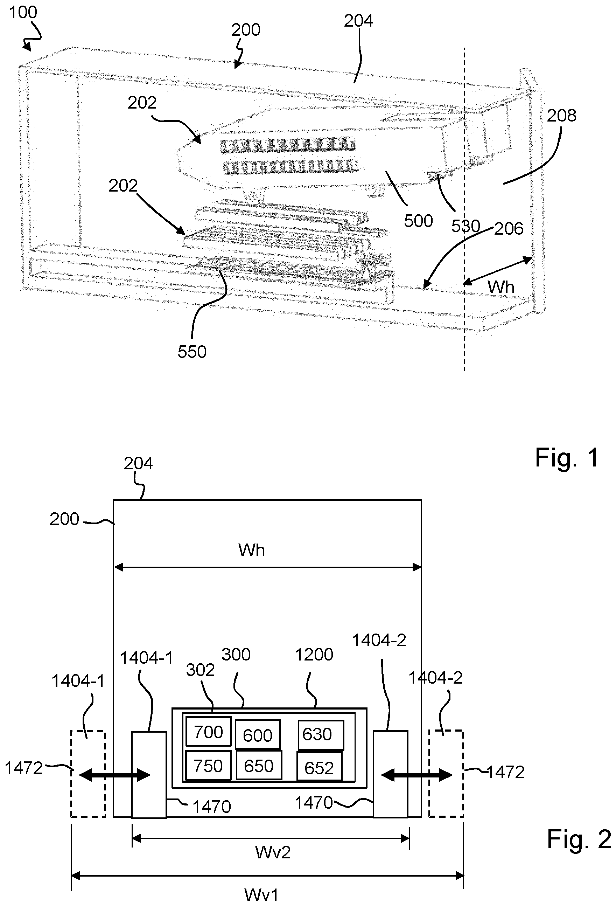

Figures 1, 2 show a first example of a system 100 for providing ammunition subcomponents to an autonomous vehicle, according to the present disclosure.

The system 100 shown in figures 1, 2 comprises a first autonomous vehicle 300 configured to carry ammunition subcomponents 400, 402, 403, 404. The first autonomous vehicle 300 comprises an ammunition subcomponent receiving system 302.

The system 100 further comprises an ammunition subcomponent loading apparatus 200. The ammunition subcomponent loading apparatus 200 comprises an ammunition subcomponent loading system 202 configured for loading the first autonomous vehicle 300 with the ammunition subcomponents 400, 402, 403, 404 via the ammunition subcomponent receiving system 302. The ammunition subcomponent loading apparatus 200 further comprises a housing 204 in which the ammunition subcomponent loading system 202 is located.

The housing 204 defines a vehicle loading bay 206. The housing 204 defines an opening 208 (for example a doorway) having a width Wh.

The first autonomous vehicle 300 of the examples of figures 1, 2 may comprise the chassis 1200 and chassis suspension system 1400 as described above and as shown in figures 29 to 36. Details of the chassis 1200 and chassis suspension system 1400 are omitted from figures 1, 2.

As illustrated in figures 29 to 36, the chassis 1200 of the first autonomous vehicle 300 comprises a first wheel arm 1402 which extends from a first side 1206 of the vehicle chassis 1200, and a second wheel arm 1402 which extends from a second side 1208 of the vehicle chassis 1200, the first side 1206 being spaced apart from the second side 1208 by the width of the vehicle chassis 1200. A first end of the first wheel arm 1402 may be coupled to the chassis 1200 by a chassis mount 1220. A second end of the first wheel arm 1402 may be coupled to a first wheel 1404-1. A first end of the second wheel arm 1402 may be coupled to the chassis 1200 by a chassis mount 1220. A second end of the second wheel arm 1402 may be coupled to a second wheel 1404-2.

As illustrated in figure 2, each wheel 1404 has an inwardly facing surface 1470 and an outwardly facing surface 1472 (i.e. when the wheels 1404-01, 1401-02 are aligned with a longitudinal axis (e.g. the x-axis) of the first autonomous vehicle 300). As shown in figure 2 the overall width Wv1, Wv2 of the vehicle is defined by the distance between the respective outwardly facing surfaces 1472 of the wheels.

As illustrated in figure 2, the chassis mounts 1220 and wheel arm to wheel couplings may be configured such that in a first configuration the overall width Wv1 of the first autonomous vehicle 300 has a first value which is greater than the width Wh of the housing opening 208.

The chassis mounts 1220 and wheel arm to wheel couplings may be configured such that in a second configuration the overall width Wv2 of the first autonomous vehicle 300 has a second value, which is less than the first value and less than the width Wh of the housing opening 208 so as to enable the first autonomous vehicle 300 to enter the housing 204.

The first configuration (in which the wheels 1404 are spaced apart further than in the second configuration) provides extra stability to the vehicle during transit (and, where present, firing of the weapon).

The housing 204 may be provided as an iso-container. In such an example, the opening 208 may be defined by a doorway/hatch 210 of the iso container.

The ammunition subcomponent loading apparatus 200 may be configured as a transport vehicle and/or vessel for the first autonomous vehicle 300. That is to say, the ammunition subcomponent loading apparatus 200 may be configured as means of delivery of the autonomous vehicle to a location. For example the housing 204 may be transported by another vehicle and deposited at a chosen location.

The ammunition subcomponent loading apparatus 200 may comprise an electrical charge apparatus for recharging a battery provided on the first autonomous vehicle 300. For example, in examples in which the autonomous vehicle is electrically powered, the ammunition subcomponent loading apparatus 200 may comprise an electrical charge apparatus for recharging a battery provided on the first autonomous vehicle 300 which powers the first autonomous vehicle 300.

Common to all examples herein disclosed, the ammunition subcomponents 400, 402, 403 may comprise a charge unit 402 and/or a stub case charge unit 403. A charge unit 402 contains an explosive material for displacing a projectile. A stub case charge unit 403 contains an explosive material for displacing a projectile and an ignition system for triggering the explosive material. Hence to fire, a projectile must be combined with at least a stub case charge unit 403. If additional range is needed, a projectile must be combined with at least a stub case charge unit 403 and one or more charge units 402.

Although not shown in figures 1, 2, the first autonomous vehicle 300 may comprise a gun barrel 3000 having a barrel axis 3002, the barrel 3000 being mounted to the chassis 1200 by a pivot mount 3004, the barrel 3000 being pivotable relative to the x-axis about a pivot axis 3100 aligned with the y-axis and mounted such that it is constrained to move in a plane defined by the x-axis and z-axis.

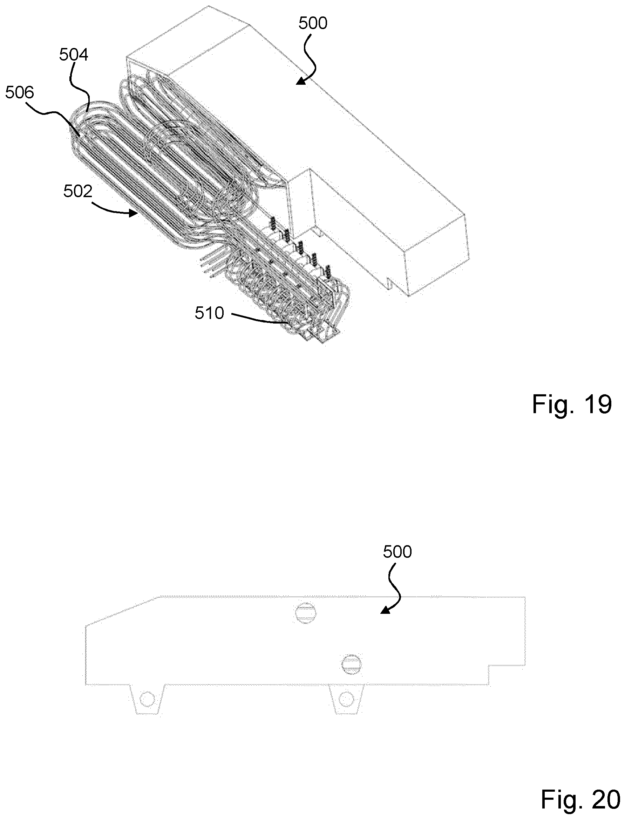

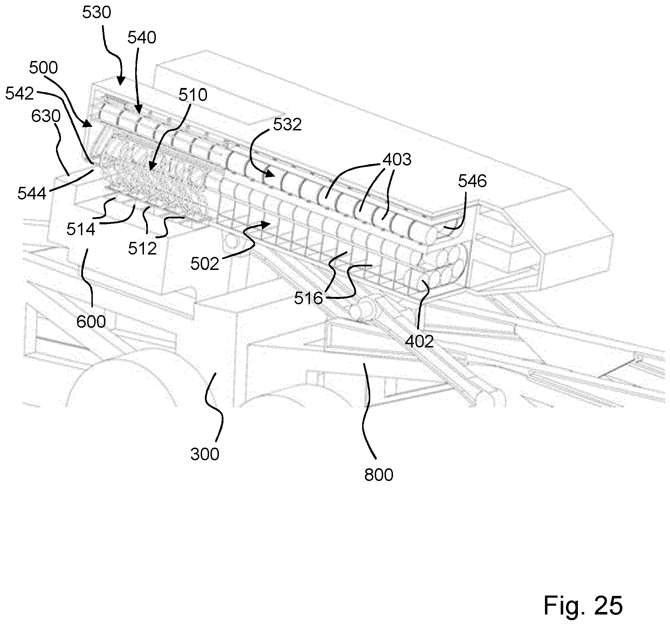

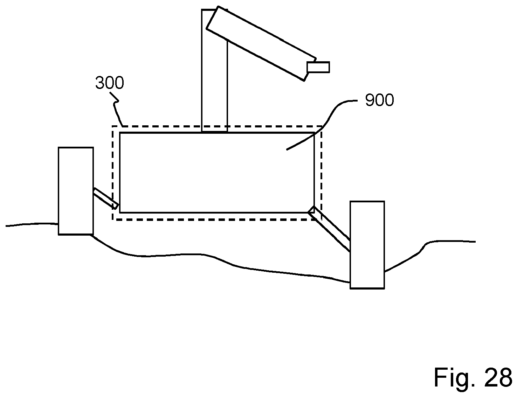

The ammunition subcomponent loading system 202 may comprise a charge unit loading system 500 and/or a stub case charge unit loading system 530 (examples of which are illustrated in figures 19 to 28).

The ammunition subcomponent receiving system 302 of the first autonomous vehicle 300 may comprise a charge unit receiving system 600 and/or a stub case charge unit receiving system 630.

The charge unit loading system 500 may be configured to couple to and deliver the charge unit 402 to the charge unit receiving system 600 of the first autonomous vehicle 300.

The stub case charge unit loading system 530 may be configured to couple to and deliver the stub case charge unit 403 to the stub case charge unit receiving system 630 of the first autonomous vehicle 300.

The ammunition subcomponent receiving system 302 of the first autonomous vehicle 300 may further comprise a charge unit storage system 650 operable to receive the charge unit 402 from the charge unit receiving system 600 of the first autonomous vehicle 300 so the charge unit 402 can be carried by the first autonomous vehicle 300.

Additionally or alternatively, the ammunition subcomponent receiving system 302 of the first autonomous vehicle 300 may comprise a stub case charge unit storage system 652 operable to receive the stub case charge unit 403 from the stub case charge unit receiving system 630 of the first autonomous vehicle 300 so the stub case charge unit 403 can be carried by the first autonomous vehicle 300.

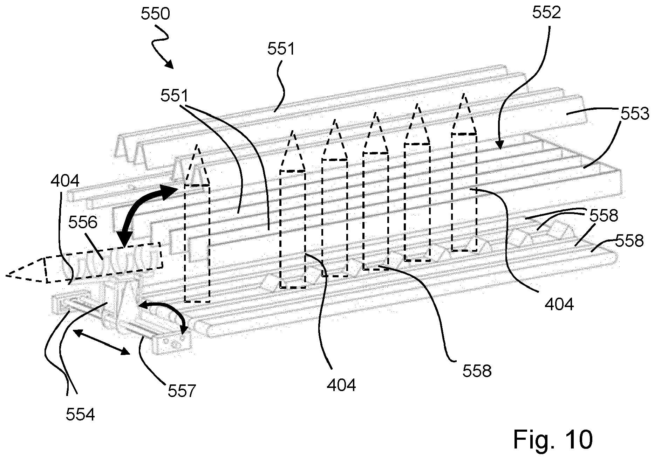

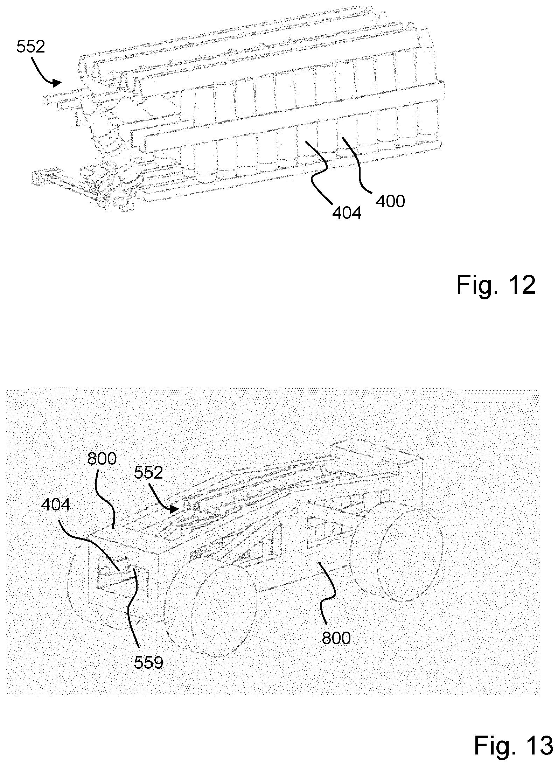

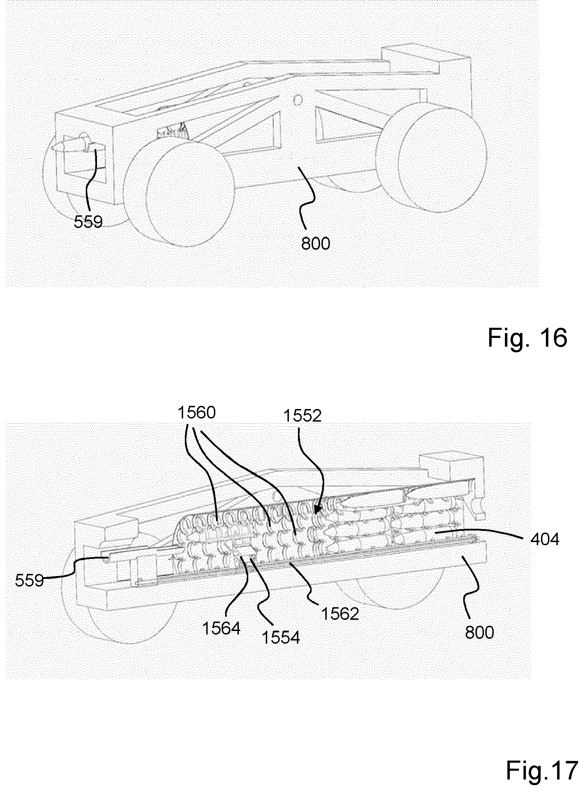

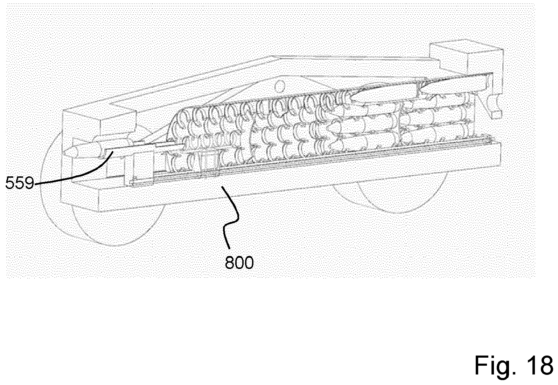

The ammunition subcomponents 400, 404 may comprise a projectile unit 404. The projectile unit 404 may comprise a housing which retains/carries/houses explosive material (for example high explosive) or material configured for providing illumination. The ammunition subcomponent loading system 202 may comprise a projectile unit loading system 550, 1550, (examples of which are illustrated in figures 10 to 18). The ammunition subcomponent receiving system 302 of the first autonomous vehicle 300 may comprise a projectile unit receiving system 700.

The projectile unit loading system 550, 1550 may be configured to couple to and deliver a projectile unit 404 to the first autonomous vehicle 300 projectile unit receiving system 700. The first autonomous vehicle 300 may further comprises a projectile unit storage system 750 operable to receive a projectile unit 404 from the first autonomous vehicle 300 projectile unit receiving system 700, for example to store the projectile unit 404 until needed for use by systems on the first autonomous vehicle 300.

The charge unit 402, stub case charge unit 403 and projectile unit 404 may be configured to be coupled together to form a live projectile ready for firing by a weapon, where the vehicle 300 may comprise a weapon for firing the projectile. The combination of the projectile and charge system may occur within the gun chamber (in examples where a gun is provided. That is to say, charge unit 402, stub case charge unit 403 and projectile unit 404 may be co-loaded as separate subcomponents to the gun chamber and combined therein.

During operation of the system of figures 1, 2, the first autonomous vehicle 300 is operated to control the wheel drive system to transport the first autonomous vehicle 300 to rendezvous with the ammunition subcomponent loading apparatus 200. Then the wheel arm actuators 1430, wheel mounting member actuators 1440 and/or drive system are controlled to position the first autonomous vehicle 300 relative to the ammunition subcomponent loading apparatus 200 such that the ammunition subcomponent receiving system 302 of the first autonomous vehicle 300 is aligned to receive the ammunition subcomponent 400 from the ammunition subcomponent loading system 202.

The ammunition subcomponent loading system 202 is then operated to deliver the ammunition subcomponent to the ammunition subcomponent receiving system 302 of the first autonomous vehicle 300.

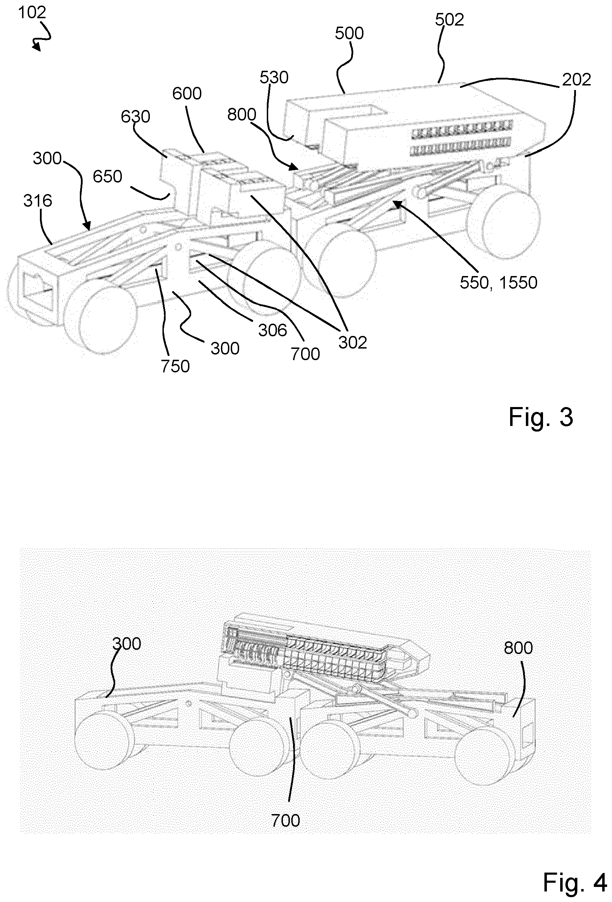

Figures 3 to 6 show a second example 102 of a system 100 for providing ammunition subcomponents to an autonomous vehicle, according to the present disclosure.

The system 100 shown in figures 3 to 6 comprises a first autonomous vehicle 300 configured to carry ammunition subcomponents 400, 402, 403, 404. The first autonomous vehicle 300 of this example also comprises an ammunition subcomponent receiving system 302.

The system 100 shown in figures 3 to 6 further comprises a second autonomous vehicle 800 comprising an ammunition subcomponent loading system 202 configured for loading the first autonomous vehicle 300 with the ammunition subcomponents 400, 402, 403, 404 by delivering the ammunition subcomponents 400, 402, 403, 404 to the ammunition subcomponent receiving system 302.

The first autonomous vehicle 300 and/or the second autonomous vehicle 800 of the examples of figures 3 to 6 may comprise the chassis 1200 and chassis suspension system 1400 as described above and as shown in figures 29 to 36. The details of the chassis 1200 and chassis suspension system 1400 are omitted from figures 3 to 6.

Hence the chassis suspension system 1400 of the first autonomous vehicle 300 may be operable to position the chassis 1200 of the first autonomous vehicle 300 relative to the second autonomous vehicle 800 such that the ammunition subcomponent receiving system 302 of the first autonomous vehicle 300 is aligned to receive the ammunition subcomponent 400 from the ammunition subcomponent loading system 202 of the second autonomous vehicle 800. This alignment may be achievable by pivoting one or more wheel arms 1402 relative to the chassis 1200 and/or by pivoting one or more wheels 1404 relative to its respective wheel arm 1402 and/or by rotating one or more wheels 1404 relative to its respective wheel arm 1402.

Additionally or alternatively, the chassis suspension system 1400 of the second autonomous vehicle 800 may be operable to position the chassis 1200 of the second autonomous vehicle 800 such that the ammunition subcomponent receiving system 302 of the first autonomous vehicle 300 is aligned to receive the ammunition subcomponent 400 from the ammunition subcomponent loading system 202 of the second autonomous vehicle 800. The alignment may be achievable by pivoting one or more wheel arms 1402 relative to the chassis 1200 and/or by pivoting one or more wheels 1404 relative to its respective wheel arm 1402 and/or by rotating one or more wheels 1404 relative to its respective wheel arm 1402.

Although not shown in figures 3 to 6, the first autonomous vehicle 300 may comprise a gun barrel 3000 having a barrel axis 3002, the barrel 3000 being mounted to the chassis 1200 by a pivot mount 3004, the barrel 3000 being pivotable relative to the x-axis about a pivot axis 3100 aligned with the y-axis and mounted such that it is constrained to move in a plane defined by the x-axis and z-axis.

The ammunition subcomponent loading system 202 of the second autonomous vehicle 800 may comprise a charge unit loading system 500 and/or a stub case charge unit loading system 530 (examples of which are illustrated in figures 19 to 28).

The ammunition subcomponent receiving system 302 of the first autonomous vehicle 300 may comprise a charge unit receiving system 600 and/or a stub case charge unit receiving system 630.

The charge unit loading system 500 may be configured to couple to and deliver the charge unit 402 to the charge unit receiving system 600 of the first autonomous vehicle 300.

The stub case charge unit loading system 530 may be configured to couple to and deliver the stub case charge unit 403 to the stub case charge unit receiving system 630 of the first autonomous vehicle 300.

The ammunition subcomponent receiving system 302 of the first autonomous vehicle 300 may further comprise a charge unit storage system 650 operable to receive the charge unit 402 from the charge unit receiving system 600 of the first autonomous vehicle 300 so the charge unit 402 can be carried by the first autonomous vehicle 300.

Additionally or alternatively the ammunition subcomponent receiving system 302 of the first autonomous vehicle 300 may further comprise a stub case charge unit storage system 652 operable to receive the stub case charge unit 403 from the stub case charge unit receiving system 630 of the first autonomous vehicle 300 so the stub case charge unit 403 can be carried by the first autonomous vehicle 300.

The ammunition subcomponent loading system 202 of the second autonomous vehicle 800 may comprises a projectile unit loading system 550, 1550. The ammunition subcomponent receiving system 302 of the first autonomous vehicle 300 may comprises a projectile unit receiving system 700.

The projectile unit loading system 550, 1550 may be configured to couple to and deliver a projectile unit 404 to the first autonomous vehicle 300 projectile unit receiving system 700, (examples of which are illustrated in figures 10 to 18). The first autonomous vehicle 300 may further comprise a projectile unit storage system 750 operable to receive a projectile unit 404 from the first autonomous vehicle 300 projectile unit receiving system 700, for example to store the projectile unit 404 until needed for use by systems on the first autonomous vehicle 300.

During operation of the system of figures 3 to 6 the wheel drive system of the first autonomous vehicle 300 and/or second autonomous vehicle 800 are controlled/operate to transport to rendezvous with the other of the first autonomous vehicle 300 and/or second autonomous vehicle 800.

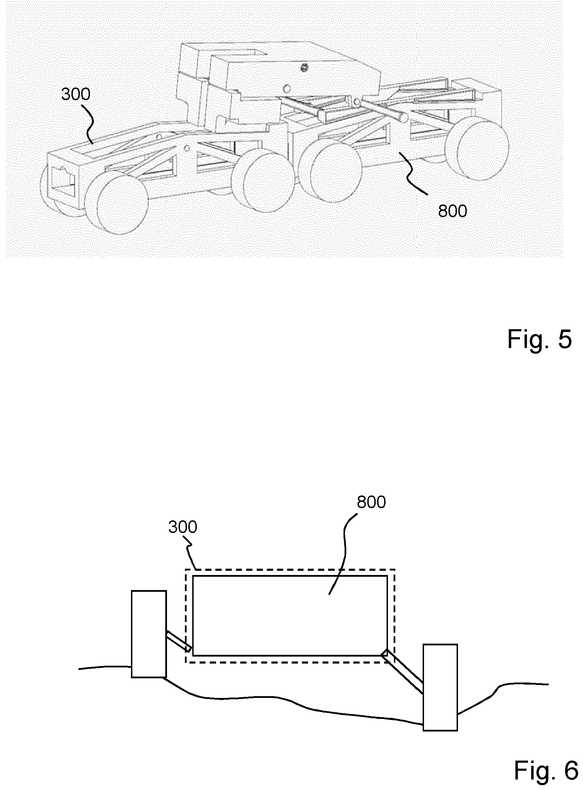

As illustrated in figure 6, the wheel arm actuators 1430, wheel mounting member actuators 1440 and/or drive system are then controlled to position the first autonomous vehicle 300 and second autonomous vehicle 800 relative to one another such that the ammunition subcomponent receiving system 302 of the first autonomous vehicle 300 is aligned to receive the ammunition subcomponent 400 from the ammunition subcomponent loading system 202 of the second autonomous vehicle 800.

An example of a charge unit loading system 500 for use with the example of figures 1, 2 and/or the example of figures 3 to 6 is illustrated in figures 19 to 22. That is to say, figures 19 to 22 illustrate an example of a charge unit loading system 500 which may be provided in the example of figures 1, 2 and/or the example of figures 3 to 6.

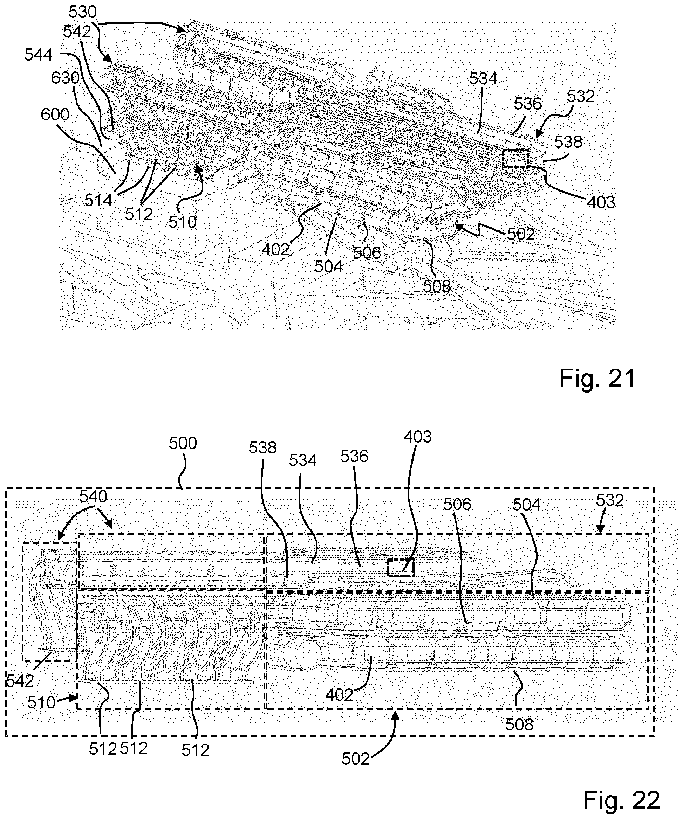

As will be appreciated, the charge unit loading system 500 is illustrated with a housing in figures 19, 20, with part of the housing removed in figure 19 to show the internal configuration of the charge unit loading system 500. The housing is not shown in figures 21, 22.

The charge unit loading system 500 may comprise a charge unit storage section 502. The charge unit storage section 502 may comprise a charge unit guide track 504 that defines a charge unit guide path 506 and is configured to retain a charge unit 402, such that the charge unit 402 is stored in the charge unit storage section 502.

The charge unit loading system 500 may further comprise a charge unit conveyor system 508 for moving the charge unit 402 along the charge unit guide track 504 to a charge unit delivery section 510. The charge unit delivery section 510 may be configured to receive the charge unit 402 from the charge unit conveyor system 508 for delivery to the charge unit receiving system 600 of the first autonomous vehicle 300.

The charge unit loading system 500 may further comprise a stub case charge unit storage section 532 which comprises a stub case charge unit guide track 534 that defines a stub case charge unit guide path 536 and is configured to retain a stub case charge unit 403 such that the stub case charge unit 403 is stored in the stub case charge unit storage section 532.

The charge unit loading system 500 may further comprise a stub case charge unit conveyor system 538 for moving the stub case charge unit 432 along the stub case charge unit guide track 534 to a stub case charge unit delivery section 540. The stub case charge unit delivery section 540 may be configured to receive the stub case charge unit 403 from the stub case charge unit conveyor system 538 for delivery to the stub case charge unit receiving system 630 of the first autonomous vehicle 300.

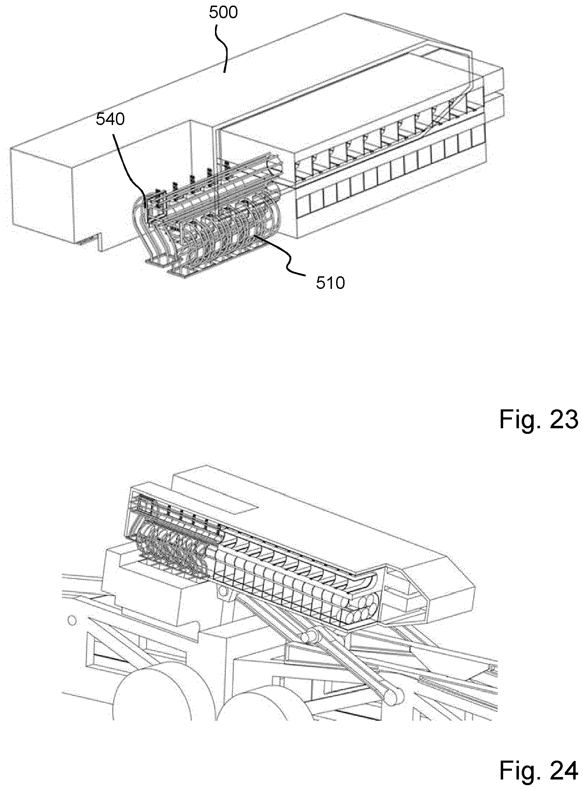

Illustrated in figures 23 to 25 is charge unit loading system 500 which comprises the features described in relation to the example shown in figures 19 to 22.

That is to say, figures 23 to 25 illustrate an alternative example of a charge unit loading system 500 which may be provided in the example of figures 1, 2 and/or the example of figures 3 to 6.

As will be appreciated, the charge unit loading system 500 of figures 23 to 25 is illustrated with a housing, although part of the housing removed to show the internal configuration of the charge unit loading system 500.

The charge unit loading system 500 of figures 23 to 25 further comprises a plurality of charge unit storage compartments 516, each of the plurality of storage compartments 516 configured to retain one or more charge units 402.

A section of the charge unit conveyor system 508 may be provided in each storage compartment 516 and said section configured for moving the charge unit 402 in each storage compartment 516 to enter the charge unit guide track 504.

The stub case charge unit storage section 532 may further comprise a plurality of stub case charge unit storage compartments 546, each of the plurality of stub case charge storage compartments 546 configured to retain one or more stub case charge units 403.

A section of the stub case charge unit conveyor system 538 may be provided in each stub case charge storage compartment 546 and said section configured for moving the stub case charge unit 403 in each stub case charge storage compartment 546 to enter the stub case charge unit guide track 534.

In both examples of the charge unit loading system 500 shown in figures 19 to 22 and figures 23 to 25, the charge unit delivery section 510 comprises a plurality of chutes which each terminate with charge unit outlet port 512, each fed from the charge unit conveyor system 508.

The vehicle charge unit receiving system 600 comprises a plurality of charge unit inlet ports 514 arranged in the same configuration as the charge outlet ports 512 and operable to be in alignment with the charge outlet ports 512 for receiving the charge unit 402 from the charge unit loading system 500.

The stub case charge unit delivery section 540 may comprise a plurality of chutes which each terminate with stub case charge unit outlet ports 542 each fed from the stub case charge unit conveyor system 538.

The vehicle stub case charge unit receiving system 630 may comprise a plurality of stub case charge unit inlet ports 544 arranged in the same configuration as the stub case charge unit outlet ports 542 and operable to be in alignment with the stub case charge outlet ports 542 for receiving the stub case charge unit 403 from the stub case charge unit loading system 530.

In both examples of the charge unit loading system 500 shown in figures 19 to 22 and figures 23 to 25, the charge unit guide track 504 and stub case charge unit guide track 534 may be arranged parallel to one another. As shown in the figures, the stub case charge unit guide track 534 may be positioned on top of the charge unit guide track 504. In other examples the stub case charge unit guide track 534 may be positioned below or to the side of the charge unit guide track 504.

The conveyor system 508 (and other conveyor systems referred to in the present disclosure) may be of any suitable configuration. The conveyor systems may comprise wheels arranged to push the ammunition subcomponents along the respective guide path. The conveyor systems may comprise a guided pushing chain in various orientations to push the ammunition subcomponents along the respective guide path.

An example of a projectile unit loading system 550 for use with the example of figures 1, 2 and the example of figures 3 to 6 is illustrated in figures 10 to 13. That is to say, figures 10 to 13 illustrate an example of a projectile unit loading system 550 which may be provided in the example of figures 1, 2 and/or the example of figures 3 to 6.

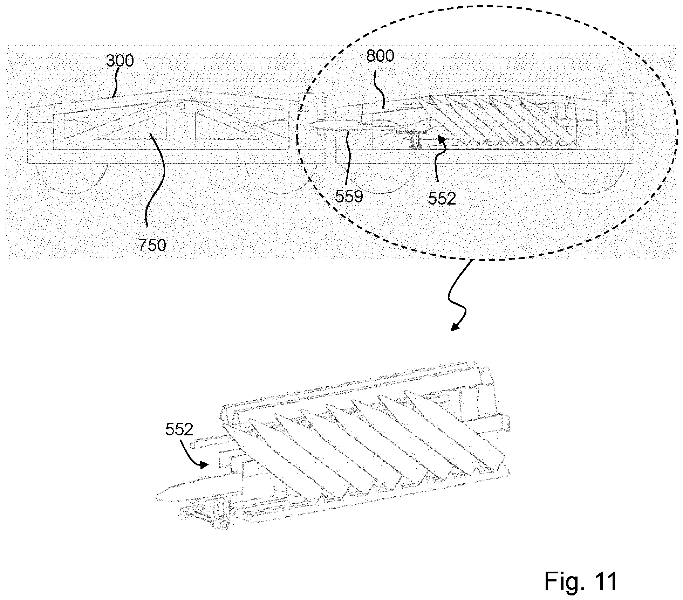

In this example the projectile unit loading system 550 comprises (i.e. defines) a storage cavity 552 configured to support the projectile unit 404 in a first orientation (for example vertical, as shown in figures 10, 12, 13 or at an angle to the vertical as shown in figure 11, for example up to 45 deg from the vertical). This arrangement which allows for projectiles to be angled enables a range of lengths of projectiles to be accommodated in the cavity 552.

The projectile unit loading system 550 may further comprise a delivery unit 554 configured to receive the projectile unit 404 in a first orientation and rotate it to be in a second orientation (for example horizontal) for delivery to the first autonomous vehicle 300 projectile unit receiving system 700.

The projectile unit loading system 550 may further comprise a conveyor 558 for moving the projectile unit 404 from the storage cavity 552 to the delivery unit 554.

As shown in figure 10, the projectile unit loading system 550 may further comprise a plurality of conveyors 558, arranged parallel to one another, for moving the projectile unit 404 from the storage cavity 552 to the delivery unit 554.

The projectile unit loading system 550 may further comprise a projectile guide structure 553 configured to support the projectile unit in the first orientation as it is moved from the storage cavity 552 to the delivery unit 554. As illustrated in figure 10, the projectile guide structure 553 may be provided as a set of parallel guide members 551 parallel to and spaced apart from the respective conveyor 558. Hence a projectile unit 404 is supported at its base by the conveyor 558 and along its length by one of more rows of guide members 551.

The delivery unit 554 may comprise a support arm 556 configured to receive and retain the projectile unit 404 in the first orientation. The support arm 556 may also be configured to pivot from the first orientation to the second orientation. The support arm 556 may also be configured to, when in the second orientation, release the projectile unit 404 so the projectile unit 404 is delivered to the projectile unit receiving system 700 of the vehicle.

The support arm 556 may also be configured to, when in the second orientation, release the projectile unit 404 so the projectile unit 404 is delivered to the projectile unit receiving system 700 of the vehicle.

The delivery unit 554 may comprise a rail 557 arranged perpendicular to the direction of the conveyor 558 so that the support arm 556 may be aligned with the end of each of the conveyors 558. The delivery unit 554 may comprise an actuator to move the support arm 556 on the rail 557.

The arrangement of this example enables multiple projective unit types to be carried in the same vehicle - for example of different sizes and capability may be carried on adjacent conveyors 558.

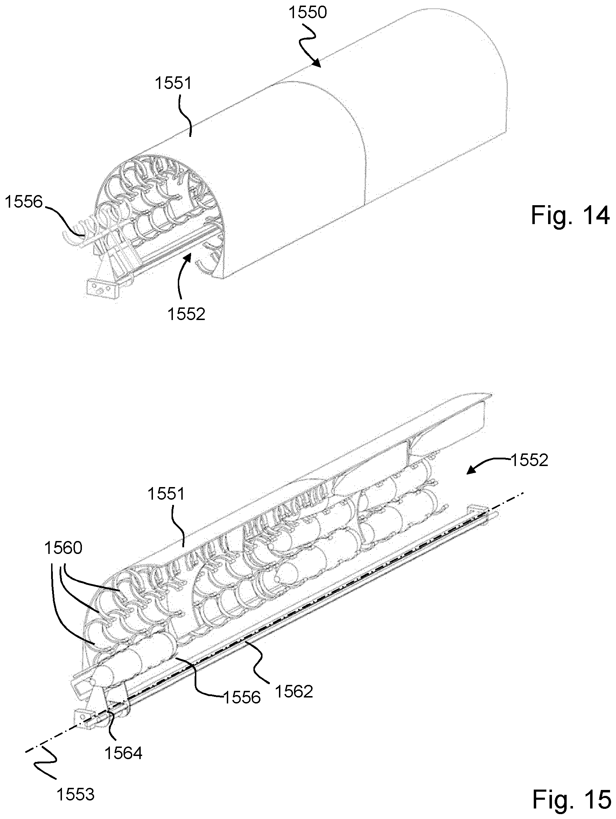

An example of a projectile unit loading system 1550 for use with the example of figures 1, 2 and the example of figures 3 to 6 is illustrated in figures 14 to 18. That is to say, figures 14 to 18 illustrate an alternative example of a projectile unit loading system 1550 which may be provided in the example of figures 1, 2 and/or the example of figures 3 to 6.

In this example the projectile unit loading system 1550 may comprise a storage cavity 1552 which defines a longitudinal axis 1553 along the length of the storage cavity 1553. The storage cavity 1552 may comprise a mount 1560 configured to support and retain the projectile unit 404 parallel to the longitudinal axis 1553 (for example horizontal) at a mount position within the storage cavity 1552.

There may be provided a plurality of mounts 1560, which may be provided as lines of spaced apart spring clips, each line of spring clips being parallel to and spaced apart from an adjacent line of clips. The clips may be configurable to allow different length, shape and weight of projectile. The clips may be spring clips.

The storage cavity 1552 may be defined by a housing 1551. As shown in the figures, the housing 1551 may be arcuate.

The projectile unit loading system 550 may further comprise a delivery unit 1554 configured to retain the projectile unit 404 parallel to the longitudinal axis 1553. The delivery unit 1554 may also be configured to retrieve the projectile unit 404 from the mount 1560. For example, the delivery unit 1554 may also be configured to retrieve the projectile unit 404 from the mount 1560 whilst retaining the projectile unit 404 parallel to the longitudinal axis 1553.

The delivery unit 1554 may also be configured to convey the projectile unit 404 from the mount position to a delivery position in the storage cavity 1552 for delivery to the first autonomous vehicle 300 projectile unit receiving system 700.

The delivery unit 1554 may comprise a support arm 1556 configured to receive and retain the projectile unit 404 parallel to the longitudinal axis 1553, a guide track 1562 which extends along the at least part of the length of the storage cavity 1552 parallel to the longitudinal axis 1553 and which extends to the delivery position and an actuator 1564 operable to move the support arm 1556 from the mount position to the delivery position.

The support arm 1556 may be mounted to the guide track 1562 via a support unit 1558. The support arm 1556 is mounted to the support unit 1558 such that it is operable to retain the projectile unit 404 parallel to the longitudinal axis 1553. The support arm 1556 is mounted to the support unit 1558 such that it is operable to retain the projectile unit 404 parallel to the longitudinal axis 1553 while moving the projectile unit 404. The support arm 1556 may be mounted to the support unit 1558 such that it is operable to withdraw the projectile unit 404 from the mount 1560, and pivot about a rotational axis 1566 parallel to the direction of the guide track 1562 to align the projectile unit 404 with the vehicle delivery position whilst retaining the projectile unit 404 parallel to the longitudinal axis 1553.

In the example of figures 3 to 6, in which the second autonomous vehicle 800 is provided with the projectile unit loading system 550 or the projectile unit loading system 1550, the vehicle may be provided with a loading chute 559 which the support arm 556 aligns with to deliver the projectile unit 404 to the first autonomous vehicle 300.

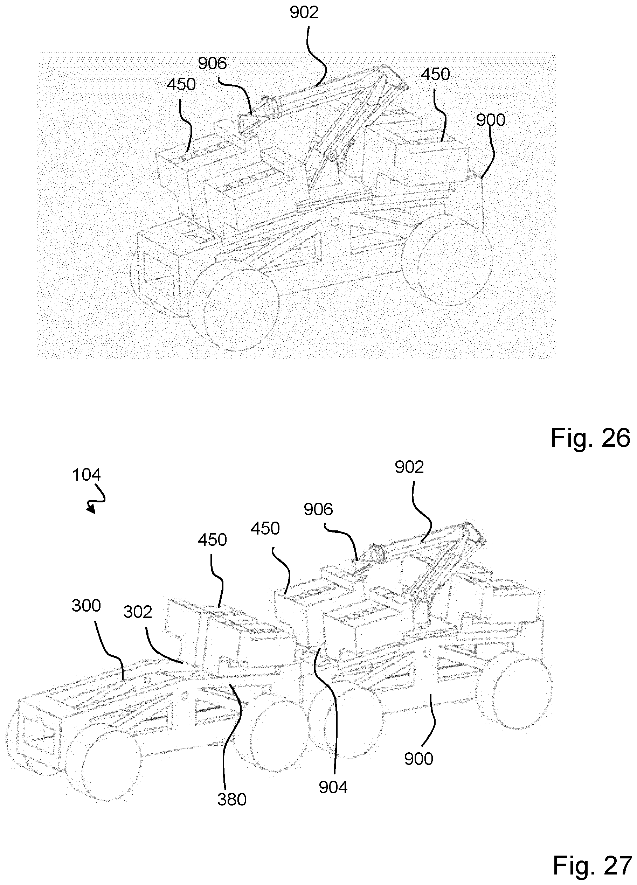

In the example of figures 26 to 28, in which the autonomous delivery vehicle 900 is provided with the projectile unit loading system 550 or the projectile unit loading system 1550, the vehicle may be provided with a loading chute 559 which the support arm 556 aligns with to deliver the projectile unit 404 to the first autonomous vehicle 300.

Figures 26 to 28 show a third example 104 of a system 100 for providing ammunition subcomponents to an autonomous vehicle, according to the present disclosure.

The system 100 shown in figures 26 to 28 comprises an autonomous delivery vehicle 900 comprising an ammunition subcomponent loading system 202 configured for delivering an ammunition subcomponent pack 450 to a target object 380 (for example the first autonomous vehicle 300 or another target. The ammunition subcomponent pack 450 is operable for storage of an ammunition subcomponent 400.

The autonomous delivery vehicle 900 may further comprising an ammunition subcomponent pack engagement support region 904 for locating (i.e. seating) the ammunition subcomponent pack 450 on the autonomous delivery vehicle 900. The autonomous delivery vehicle 900 may comprise a lifting arm 902 comprising a grip 906.

The lifting arm 902 may be configured to couple to the ammunition pack 450 on the autonomous delivery vehicle 900 using the grip 906, lift the ammunition pack 450 from the ammunition subcomponent pack engagement support region 904 and deposit it on the target object 380

Additionally or alternatively the lifting arm 902 may be configured to couple to an ammunition pack 450 on the target object 380 using the grip 906, lift it from the target object 380 and deposit the ammunition pack 450 on the ammunition subcomponent pack engagement support region 904 on the autonomous delivery vehicle 900.

The autonomous delivery vehicle 900 of the examples of figures 26 to 28 may comprise the chassis 1200 and chassis suspension system 1400 as described above and as shown in figures 29 to 36. The details of the chassis 1200 and chassis suspension system 1400 are omitted from figures 26 to 28.

The chassis suspension system 1400 of the autonomous delivery vehicle 900 is operable to position the chassis 1200 of the autonomous delivery vehicle 900 relative to a target object 380 so that the grip 906 is operable to reach between the autonomous delivery vehicle 900 and the target object 380, the alignment achievable by pivoting one or more wheel arms 1402 relative to the chassis 1200 and/or by pivoting one or more wheels 1404 relative to its respective wheel arm 1402 and/or by rotating one or more wheels 1404 relative to its respective wheel arm 1402.

The lifting arm 902 may be configured to couple to the target object 380. The autonomous delivery vehicle 900 may be operable to apply a force to move the target object 380. That is to say, the autonomous delivery vehicle 900 may be operable to apply a force to lift, position and/or tow the target object 380.

The target object may be a first autonomous vehicle 300 configured to carry an ammunition subcomponent 400 and/or plurality of ammunition subcomponents 400, and may comprise an ammunition subcomponent receiving system 302. The lifting arm 902 may be configured to deposit the ammunition pack 450 on the ammunition subcomponent receiving system 302.

The first autonomous vehicle 300 of the examples of figures 26 to 28 may comprise the chassis 1200 and chassis suspension system 1400 as described above and as shown in figures 29 to 36. The details of the chassis 1200 and chassis suspension system 1400 are omitted from figures 26 to 28.

The chassis suspension system 1400 of the first autonomous vehicle 300 is operable to position the chassis 1200 of the first autonomous vehicle 300 relative to the autonomous delivery vehicle 900 such that the ammunition subcomponent receiving system 302 of the first autonomous vehicle 300 is aligned to receive the ammunition pack 450 from the lifting arm 902 of the autonomous delivery vehicle 900. The alignment achievable by pivoting one or more wheel arms 1402 relative to the chassis 1200 and/or by pivoting one or more wheels 1404 relative to its respective wheel arm 1402 and/or by rotating one or more wheels 1404 relative to its respective wheel arm 1402.

Although not shown in figures 29 to 36 the first autonomous vehicle 300 may comprise a gun barrel 3000 having a barrel axis 3002, the barrel 3000 being mounted to the chassis 1200 by a pivot mount 3004, the barrel 3000 being pivotable relative to the x-axis about a pivot axis 3100 aligned with the y-axis and mounted such that it is constrained to move in a plane defined by the x-axis and z-axis.

During operation of the system of figures 29 to 26 the wheel drive system may be controlled to transport the autonomous delivery vehicle 900 to rendezvous with the target object 380.

The wheel arm actuators 1430, wheel mounting member actuators 1440 and/or drive system may then be controlled to position the autonomous delivery vehicle 900 relative to the target object 380 such that that the grip 906 is operable to reach between autonomous delivery vehicle 900 and the target object 380.

The system of figures 29 to 36 may be operated to couple to the ammunition pack 450 on the autonomous delivery vehicle 900 using the grip 906, lifting the ammunition pack 450 from the ammunition subcomponent pack engagement support region 904 and deposit the ammunition pack 450 on the target object 380.

The system of figures 29 to 36 may be operated to couple to an ammunition pack 450 on the target object 380 using the grip 906, lift the ammunition pack 450 from the target object 380 and deposit the ammunition pack 450 on the ammunition subcomponent pack engagement support region 904 on the autonomous delivery vehicle 900.

The system of figures 29 to 36 may be operated to couple the lifting arm 902 to the target object 380. The autonomous delivery vehicle 900 may then be controlled to applying a force to move the target object 380 (for example lift, position and/or tow the target object 380).

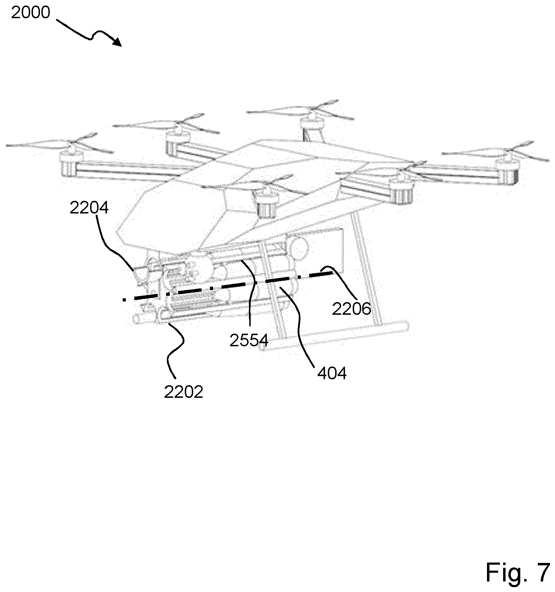

Figures 7 to 9 show a fourth example 106 of a system 100 for providing ammunition subcomponents to an autonomous vehicle, according to the present disclosure.

The system 100 shown in figures 7 to 9 comprises a system 100 comprising a first autonomous vehicle 300 configured to carry an ammunition subcomponent 400 and/or plurality of ammunition subcomponents 400, and the first autonomous vehicle 300 comprising an ammunition subcomponent receiving system 302.

The system 100 of figures 7 to 9 further comprises an autonomous heavy lift drone air-vehicle 2000 comprising an ammunition subcomponent loading system 2202 configured for loading the first autonomous vehicle 300 with the ammunition subcomponent 400 and/or plurality of ammunition subcomponents 400 by delivering the ammunition subcomponent 400 to the ammunition subcomponent receiving system 302 of the first autonomous vehicle 300.

In the example shown in figures 7 to 9, the ammunition subcomponent 400 is provided as a projectile unit 404. That is to say, the ammunition subcomponent loading system 2202 of the autonomous heavy lift drone air-vehicle 2000 may be configured for delivering projectile units 404.

The ammunition subcomponent loading system 2202 of the autonomous heavy lift drone air-vehicle 2000 may comprise a storage cavity 2552 configured to support and retain the ammunition subcomponent 400 (e.g. horizontal) at a mount position within the storage cavity 2552.

The ammunition subcomponent loading system 2202 of the autonomous heavy lift drone air-vehicle 2000 may further comprise a delivery unit 2554 configured to retrieve the ammunition subcomponent 400 from the mount position within the storage cavity 2552.

The delivery unit 2554 may be configured to convey the ammunition subcomponent 400 from the mount position to a delivery position in the storage cavity 2552 for delivery to the ammunition subcomponent receiving system 302 of the first autonomous vehicle 300.

The delivery unit 2554 may comprise a conveyor system 2562 (for example linear chains) for moving the ammunition subcomponent 400 along the storage cavity 2552 for delivery to the ammunition subcomponent receiving system 302 of the first autonomous vehicle 300.

The ammunition subcomponent loading system 2202 of the autonomous heavy lift drone air-vehicle 2000 may comprise a housing 2204 which defines a plurality of storage cavities 2552, each configured to support and retain an ammunition subcomponent 400 (e.g. horizontally) at a mount position within the respective storage cavity 2552.

The housing 2204 may be centred on and rotatable about a rotational axis 2206 such that the delivery position of each storage cavity 2552 is movable around the rotational axis 2206 to be aligned, in turn, with the ammunition subcomponent receiving system 302 of the first autonomous vehicle 300.

The housing 2204 may be coupled to an indexing system (for example a rotary indexing system or stepper motor) operable to control the rotation of the housing 2204 about the rotational axis 2206.

The first autonomous vehicle 300 of the examples of figures 7 to 9 may comprise the chassis 1200 and chassis suspension system 1400 as described above and as shown in figures 29 to 36. The details of the chassis 1200 and chassis suspension system 1400 are omitted from figures 7 to 9.

The chassis suspension system 1400 of the first autonomous vehicle 300 is operable to position the chassis 1200 of the first autonomous vehicle 300 relative to the heavy lift drone air-vehicle 2000 such that the ammunition subcomponent receiving system 302 of the first autonomous vehicle 300 is aligned to receive the ammunition subcomponent 400 from the ammunition subcomponent loading system 2202 of the autonomous heavy lift drone air-vehicle 2000.

Although not shown in figures 7 to 9, the first autonomous vehicle 300 may comprises a gun barrel 3000 having a barrel axis 3002, the barrel 3000 being mounted to the chassis 1200 by a pivot mount 3004, the barrel 3000 being pivotable relative to the x-axis about a pivot axis 3100 aligned with the y-axis and mounted such that it is constrained to move in a plane defined by the x-axis and z-axis.

During operation of the system of figures 7 to 9, the autonomous heavy lift drone air-vehicle 2000 may be controlled to fly to rendezvous with the first autonomous vehicle 300.

Additionally or alternatively, the wheel drive system may be controlled to transport the first autonomous vehicle 300 to rendezvous with the autonomous heavy lift drone air-vehicle 2000.

The wheel arm actuators 1430, wheel mounting member actuators 1440 and/or drive system may be controlled to position the first autonomous vehicle 300 relative to the ammunition subcomponent loading system 2202 of the autonomous heavy lift drone air-vehicle 2000 such that the ammunition subcomponent receiving system 302 of the first autonomous vehicle 300 is aligned to receive the ammunition subcomponent 400 from the ammunition subcomponent loading system 2202.

Hence there is provided a system which provides ammunition, or ammunition subcomponents, to an autonomous vehicle operable as a gun system. The system may be operable to provide ammunition direct to vehicles with gun systems, or may load autonomous delivery vehicles which transport ammunition to vehicles with gun systems.

The examples set out in the present disclosure enable ammunition subcomponents (e.g. charge units, stub charge case units and projective units) to be delivered for assembly prior to use, where the assembly may be an automated process executed by the gun system vehicle.

The suspension system of one or more of autonomous vehicles allow alignment between loading systems and receiving systems of the present disclosure. In examples where the ammunition subcomponent loading apparatus 200 comprises a housing 204, the suspension system also enables an autonomous vehicle to enter the housing 204.

In the examples in which an autonomous vehicle is provided with a weapon system (eg configured as the gun targeting system) the configuration of the present disclosure enables a relatively lightweight vehicular solution for delivering a weapon system to a firing position and then targeting the gun of the weapon system, compared to examples of the related art. This is achieved by using the chassis suspension system 1400 to position the gun barrel towards a targeting position so that further adjustment, if needed, is only for elevation of the gun barrel, which may be done by a separate actuator or manually. Hence, compared to a gun targeting system of the related art, the traverse system of related art solutions has been dispensed with. This has the advantage that by reducing the number of different systems on the platform, the total platform can be made lighter, hence more agile, faster, fuel efficient and overall more reliable than examples of the related art.

A further advantage of the system of the present disclosure is that because the system is configured so that the gun barrel cannot be swung about the z-axis, the system is less likely to tip over during firing of the gun. This is because while the width of the chassis 1200 may have to be limited in order to allow for the gun targeting system to be transported and/or suitably narrow to fit through obstacles, the length of the chassis 1200 may be greater than the width of the chassis 1200 without jeopardising the transportability of the gun targeting system as a whole. Hence fixing the gun barrel relative to the longitudinal axis of the chassis (i.e. the longest axis of the chassis) provides maximum stability. Also since the wheel arms and wheels may be extended forward and aft of the chassis 1200 this provides extra stability during the firing cycle.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system comprising:
a first autonomous vehicle configured to carry an ammunition subcomponent and comprising an ammunition subcomponent receiving system;
the system further comprising an autonomous heavy lift drone air-vehicle comprising an ammunition subcomponent loading system configured for loading the first autonomous vehicle with the ammunition subcomponent by delivering the ammunition subcomponent to the ammunition subcomponent receiving system of the first autonomous vehicle.

2. A system as claimed in claim 1 wherein the ammunition subcomponent loading system of the autonomous heavy lift drone air-vehicle comprises:
a storage cavity configured to support and retain the ammunition subcomponent at a mount position within the storage cavity; and
a delivery unit configured to:
retrieve the ammunition subcomponent from the mount position within the storage cavity; and
convey the ammunition subcomponent from the mount position to a delivery position in the storage cavity for delivery to the ammunition subcomponent receiving system of the first autonomous vehicle.

3. A system as claimed in claim 2 wherein the delivery unit comprises a conveyor system for moving the ammunition subcomponent along the storage cavity for delivery to the ammunition subcomponent receiving system of the first autonomous vehicle.

4. A system as claimed in claim 2 or claim 3 wherein the ammunition subcomponent loading system of the autonomous heavy lift drone air-vehicle comprises a housing which defines a plurality of storage cavities, each configured to support and retain an ammunition subcomponent at a mount position within the respective storage cavity.

5. A system as claimed in claim 4 wherein the housing is centred on and rotatable about a rotational axis such that the delivery position of each storage cavity is movable around the rotational axis to be aligned, in turn, with the ammunition subcomponent receiving system of the first autonomous vehicle.

6. A system as claimed in claim 4 or claim 5 wherein the housing is coupled to a indexing system operable to control the rotation of the housing about the rotational axis.

7. A system as claimed in any one of the preceding claims wherein the first autonomous vehicle comprises:
a chassis extending along an x-axis, a first end of the chassis and a second end of the chassis spaced apart from one another along the x-axis; the chassis extending along a y-axis, a first side of the chassis and a second side of the chassis spaced apart from one another along the y-axis; the x-axis being at right angles to the y-axis; the x-axis defining a chassis roll axis, the y-axis defining a chassis pitch axis and a z-axis defining a chassis yaw axis; the z-axis being perpendicular to the x-axis and y-axis;
a chassis suspension system comprising a plurality of wheel arms, each wheel arm extending away from a different chassis mount on the chassis to a respective wheel, each wheel being rotatably mounted on its respective wheel arm, each wheel configured for engagement with a support surface,
each wheel arm and wheel configured to support the chassis apart from the support surface;
each wheel arm being pivotable relative to the chassis such that the roll of the chassis about the x-axis, the pitch of the chassis about the y-axis, the yaw of the chassis about the z-axis and height of the chassis in the z-axis is controllable by pivoting at least one of the wheel arms relative to the chassis; and each wheel being pivotable relative to its respective wheel arm; whereby
the chassis suspension system of the first autonomous vehicle is operable to position the chassis of the first autonomous vehicle relative to the heavy lift drone air-vehicle such that the ammunition subcomponent receiving system of the first autonomous vehicle is aligned to receive the ammunition subcomponent from the ammunition subcomponent loading system of the autonomous heavy lift drone air-vehicle;
the alignment achievable by pivoting one or more wheel arms relative to the chassis and/or by pivoting one or more wheels relative to its respective wheel arm and/or by rotating one or more wheels relative to its respective wheel arm.

8. A system as claimed in claim 7 wherein the first autonomous vehicle comprises a gun barrel having a barrel axis, the barrel being mounted to the chassis by a pivot mount, the barrel being pivotable relative to the x-axis about a pivot axis aligned with the y-axis and mounted such that it is constrained to move in a plane defined by the x-axis and z-axis.

9. A system as claimed in any one of claims 1 to 8 wherein the ammunition subcomponent is provided as a projectile unit

10. A method of operating a system, the system comprising:
a first autonomous vehicle configured to carry an ammunition subcomponent and comprising an ammunition subcomponent receiving system;
an autonomous heavy lift drone air-vehicle comprising an ammunition subcomponent loading system configured for loading the first autonomous vehicle with the ammunition subcomponent by delivering the ammunition subcomponent to the ammunition subcomponent receiving system;
the first autonomous vehicle comprising a chassis, wheel arm actuators, wheel mounting member actuators and wheel drive system;
wherein the chassis extends along an x-axis, a first end of the chassis and a second end of the chassis are spaced apart from one another along the x-axis; the chassis extending along a y-axis, a first side of the chassis and a second side of the chassis spaced apart from one another along the y-axis; the x-axis being at right angles to the y-axis;
the x-axis defining a chassis roll axis, the y-axis defining a chassis pitch axis and a z-axis defining a chassis yaw axis; the z-axis being perpendicular to the x-axis and y-axis;
the wheel arm actuators, wheel mounting member actuators, wheel drive system forming part of a chassis suspension system coupled to the chassis;
wherein the method comprises the steps of:
controlling the autonomous heavy lift drone air-vehicle to fly to rendezvous with the first autonomous vehicle; and/or
controlling the wheel drive system to transport the first autonomous vehicle to rendezvous with the autonomous heavy lift drone air-vehicle;
controlling the wheel arm actuators, wheel mounting member actuators and/or drive system to position the first autonomous vehicle relative to the ammunition subcomponent loading system of the autonomous heavy lift drone air-vehicle such that the ammunition subcomponent receiving system of the first autonomous vehicle is aligned to receive the ammunition subcomponent from the ammunition subcomponent loading system.
